(19) **Europäisches Patentamt**
**European Patent Office**
**Office européen des brevets**

(11) **EP 4 539 355 A1**

(12) **EUROPEAN PATENT APPLICATION**
published in accordance with Art. 153(4) EPC

(43) Date of publication:
**16.04.2025 Bulletin 2025/16**

(21) Application number: **23834789.2**

(22) Date of filing: **30.06.2023**

(51) International Patent Classification (IPC):
**H04B 7/185** (2006.01)

(52) Cooperative Patent Classification (CPC):
**H04B 7/185**

(86) International application number:
**PCT/CN2023/105245**

(87) International publication number:
**WO 2024/008022 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.07.2022 CN 202210798859**
**10.08.2022 CN 202210957934**

(71) Applicant: **Huawei Technologies Co., Ltd.
Shenzhen, Guangdong 518129 (CN)**

(72) Inventors:
• **FAN, Liangliang
Shenzhen, Guangdong 518129 (CN)**
• **XU, Haibo
Shenzhen, Guangdong 518129 (CN)**
• **XUE, Lixia
Shenzhen, Guangdong 518129 (CN)**

(74) Representative: **Gill Jennings & Every LLP
The Broadgate Tower
20 Primrose Street
London EC2A 2ES (GB)**

(54) **NON-TERRESTRIAL NETWORK COMMUNICATION METHOD, APPARATUS AND SYSTEM**

(57) Embodiments of this application relate to a non-terrestrial network communication technology, and provide a non-terrestrial network communication method, apparatus, and system, to trigger a terminal to sense whether the terminal is located within a coverage area of a cell served by a new satellite on the ground when identifiers of cells served by the new satellite and an old satellite are the same during alternation of the new satellite and the old satellite, so as to ensure subsequent normal communication of the terminal. The method includes: A terminal receives, from a first network device, a message indicating that a satellite that provides a service for a first cell is updated to a second satellite, where the first message includes information used to determine a coverage area of a second cell served by the second satellite on the ground. The terminal determines, based on a location of the terminal and the coverage area of the second cell on the ground, whether the terminal is located within or outside the coverage area. In the solutions, the terminal may sense alternation of the new satellite and the old satellite, and determine whether the terminal is located within the coverage area of the second cell on the ground, so that the terminal performs different processing based on different determining results.

FIG. 9

**Description**

This application claims priorities to Chinese Patent Application No. 202210798859.6, filed with the China National Intellectual Property Administration on July 6, 2022 and entitled "COMMUNICATION METHOD AND APPARATUS", and to Chinese Patent Application No. 202210957934.9, filed with the China National Intellectual Property Administration on August 10, 2022 and entitled "NON-TERRESTRIAL NETWORK COMMUNICATION METHOD, APPARATUS, AND SYSTEM", both of which are incorporated herein by reference in their entireties.

**TECHNICAL FIELD**

Embodiments of this application relate to the field of non-terrestrial network communication technologies, and in particular, to a communication method, apparatus, and system.

**BACKGROUND**

A non-terrestrial network (Non-Terrestrial Network, NTN) is a network or a network segment using a radio frequency on board a satellite (an uncrewed aircraft system (uncrewed aircraft system, UAS) platform). Satellite communication has advantages such as a wide coverage area, a long communication distance, high reliability, high flexibility, and a high throughput, is not affected by a geographical environment, a climatic condition, or a natural disaster, and has been widely used in fields such as aeronautical communication, maritime communication, and military communication. Introduction of a satellite into a future 5th generation (5th Generation, 5G) mobile network can provide communication services for areas, such as a sea and a forest, that are difficult to be covered by a terrestrial network, can enhance reliability of 5G communication, for example, provide more stable communication services with better quality for a train, an airplane, and users on such means of transportation, and can further provide more data transmission resources, and support more connections.

When a satellite provides a service for a cell, each satellite covers one or more cells on the ground. Because the satellite is mobile, the satellite may have different coverage areas on the ground at different time as the satellite moves. However, generally, a cell accessed by a terminal remains unchanged in a period of time. Because of movement of an old satellite, a new satellite provides a service only after the old satellite cannot provide a service for a physical area (for example, the cell) any more. Generally, services are provided by other satellites in a same orbit. Due to a spacing between satellites, a distance between two satellites is long. Because a distance from the new satellite to a terminal is different from a distance from the old satellite to the terminal, a coverage area of a cell served by the new satellite on the ground may also be different from a coverage area of a cell served by the old satellite on the ground. Therefore, during alternation of the new satellite and the old satellite, how to enable the terminal to sense whether the terminal is located within the coverage area of the cell served by the new satellite on the ground, to be more beneficial for an NTN communication system is a technical problem that needs to be urgently resolved.

**SUMMARY**

Embodiments of this application provide a communication method, apparatus, and system, to trigger a terminal to sense whether the terminal is located within a coverage area of a cell served by a new satellite on the ground when identifiers of cells served by the new satellite and an old satellite are the same during alternation of the new satellite and the old satellite, so as to ensure subsequent normal communication of the terminal.

According to a first aspect, an embodiment of this application provides a communication method, including: A terminal receives a first message from a first network device. The first message indicates that a satellite that provides a service for a first cell is updated from a first satellite to a second satellite. The first cell is a cell accessed by the terminal, the first network device corresponds to the first satellite, the first message includes first information, and the first information is used to determine a coverage area of a second cell served by the second satellite on the ground. In response to the first message, the terminal determines, based on a location of the terminal and the coverage area of the second cell on the ground, whether the terminal is located within the coverage area or outside the coverage area. The first cell and the second cell have a same cell identifier.

This embodiment of this application provides the communication method. In the method, when it is determined that the satellite that provides a service for the first cell is updated from the first satellite to the second satellite, that is, during alternation of a new satellite and an old satellite, the first network device sends the first message to the terminal. Because the first message indicates, to the terminal, that the satellite that provides a service for the first cell is updated from the first satellite to the second satellite, the terminal can sense that the satellite that covers the first cell changes. The second satellite serves the second cell, and the first cell and the second cell have the same cell identifier. Although the first cell and the second cell have the same cell identifier, coverage areas of the first cell and the second cell on the ground may be different. The terminal may be located outside the coverage area of the second cell on the ground, or may be located within the coverage area of the second cell on the ground. Therefore, to avoid communication interruption caused by a case in which the terminal cannot normally access the second cell when the terminal is located outside the coverage area of the second cell, in this application, the first network device sends, to the terminal, information about the coverage area of the second cell served by the second satellite on the ground, so that the terminal can further determine, with reference to the location of the terminal, whether the terminal is located within the coverage area of the second cell on the ground or outside the coverage area, and take an appropriate processing measure.

In a possible implementation of this application, after that the terminal determines, based on a location of the terminal and the coverage area of the second cell on the ground, whether the terminal is located within the coverage area or outside the coverage area, the method provided in this embodiment of this application may further include: The terminal sends a second message to the first network device. The second message indicates that the terminal is located within a coverage area of the second satellite on the ground, or the second message indicates that the terminal is located outside a coverage area of the second satellite on the ground. The second message is sent, so that the first network device determines whether the terminal is located within the coverage area of the second satellite on the ground, and the first network device performs subsequent processing.

In a possible implementation of this application, the second message includes second indication information, and the second indication information indicates that the terminal is located within the coverage area of the second cell served by the second satellite on the ground. Alternatively, the second indication information indicates that the terminal is located outside the coverage area of the second cell served by the second satellite on the ground. For example, the second indication information may be a first indicator, and the first indicator indicates that the terminal is located within the coverage area of the second cell served by the second satellite on the ground. The second indication information may be a second indicator, and the second indicator indicates that the terminal is located outside the coverage area of the second cell served by the second satellite on the ground. The second indication information is carried in the second message, so that the second indication information may be indicated to the first network device in an explicit manner.

In a possible implementation of this application, after that the terminal determines, based on a location of the terminal and the coverage area of the second cell on the ground, whether the terminal is located within the coverage area or outside the coverage area, the method provided in this embodiment of this application may further include: The terminal sends location information of the terminal and/or measurement report information of the terminal to the first network device. In this way, the first network device determines, based on the location information of the terminal, whether the terminal is located within the coverage area of the second cell served by the second satellite on the ground. The measurement report information helps the first network device select a third cell for the terminal or configure a cell handover condition for the terminal when the terminal is located outside the coverage area of the second cell served by the second satellite on the ground.

In a possible implementation of this application, the location information of the terminal and/or the measurement report information of the terminal may be carried in the second message. In this way, signaling overheads can be reduced.

In a possible implementation of this application, when the terminal is located within the coverage area of the second cell served by the second satellite on the ground, the method provided in this embodiment of this application further includes: The terminal performs downlink synchronization in the second cell, to synchronize with a second network device to which the second cell belongs. When the terminal is located within the coverage area of the second cell served by the second satellite on the ground, the terminal performs downlink synchronization again in a current serving cell (that is, the first cell). In this way, after the terminal synchronizes with the second network device to which the second cell belongs, the terminal can receive a downlink broadcast message from the second network device, to ensure subsequent normal communication.

In a possible implementation of this application, before coverage end time of the first satellite on the ground, and/or after coverage start time of the second cell served by the second satellite, the terminal synchronizes with the second network device corresponding to the second cell.

In a possible implementation of this application, when the terminal synchronizes with the second network device, the method provided in this embodiment of this application may further include: The terminal initiates a random access process to the second network device. In this way, the terminal performs subsequent communication through a connection established with the second network device, for example, receives downlink transmission delivered by the second network device, or sends uplink transmission to the second network device.

In a possible implementation of this application, when the following first condition is met, the terminal initiates the random access process to the second network device. The first condition includes any one of the following: before the coverage end time of the first satellite on the ground; after the coverage start time of the second satellite on the ground; data transmission is needed; or an uplink time alignment timer of the terminal does not expire.

In a possible implementation of this application, when a second condition is met, the terminal does not need to initiate a random access process to the second network device. The second condition includes at least that an uplink time alignment timer of the terminal expires or an uplink time alignment timer of the terminal is not started.

In a possible implementation of this application, the method provided in this embodiment of this application further includes: The terminal receives a first command (for example, an uplink time alignment command) from the second network device in the random access process. The terminal restarts the uplink time alignment timer of the terminal based on the uplink time alignment command.

In a possible implementation of this application, when the terminal is located within the coverage area of the second cell on the ground, the method provided in this embodiment of this application further includes: The terminal skips evaluating another CHO condition; or the terminal skips measuring a candidate target cell corresponding to a CHO configuration; or the terminal releases another CHO configuration.

In a possible implementation of this application, when the terminal is located within the coverage area of the second cell on the ground, the method provided in this embodiment of this application further includes: The terminal sends a fifth message to the first network device, where the fifth message indicates the terminal to skip evaluating a CHO configuration, or skip measuring a CHO configuration, or release a CHO configuration. For example, the fifth message includes one piece of indication information indicating the terminal to skip evaluating the CHO configuration, or skip measuring the CHO configuration, or release the CHO configuration.

In a possible implementation of this application, when the terminal is located outside the coverage area of the second cell on the ground, the method provided in this embodiment of this application further includes: The terminal receives a third message from the first network device. The third message indicates the terminal to switch to a target cell, the target cell and the first cell have different cell identifiers, and the terminal is located within a coverage area of the target cell. The terminal changes a serving cell of the terminal from the first cell to the target cell based on the third message.

In a possible implementation of this application, the third message includes indication information indicating the terminal to switch to the target cell. Optionally, the third message may be a cell handover message.

In a possible implementation of this application, the third message includes first configuration information, and the first configuration information is used by the terminal to determine information about the target cell. Correspondingly, that the terminal changes a serving cell of the terminal from the first cell to the target cell based on the third message includes: The terminal determines the information about the target cell based on the first configuration information; and the terminal changes the serving cell of the terminal from the first cell to the target cell based on the information about the target cell.

In a possible implementation of this application, the third message includes second configuration information, and the second configuration information includes a cell handover condition configured for the terminal. That the terminal changes a serving cell of the terminal from the first cell to the target cell based on the third message includes: When the cell handover condition included in the second configuration information is met, the terminal changes the serving cell of the terminal from the first cell to the target cell.

In a possible implementation of this application, the first message includes a first time parameter and/or a second time parameter; the first time parameter is used to determine coverage start time of the second satellite corresponding to the second cell on the ground; and the second time parameter is used to determine coverage end time of the second satellite corresponding to the second cell on the ground. The method provided in this embodiment of this application further includes: Based on the first time parameter and/or the second time parameter, the terminal synchronizes with the second network device corresponding to the second satellite after the coverage start time of the second satellite on the ground, or sends the second message to the first network device before the coverage start time of the second satellite on the ground.

In a possible implementation of this application, the first message further includes one or more of the following information: time information for performing, by the terminal, downlink synchronization in the second cell;

NTN parameter information of the second satellite, where the NTN parameter information includes parameter information needed for the terminal to access an NTN corresponding to the second satellite;

third indication information, where the third indication information indicates location information of NTN parameter information; or

information about a measurement timing configuration, indicating the terminal to search, based on the measurement timing configuration, for a downlink synchronization signal of the second cell in the second satellite.

According to a second aspect, an embodiment of this application provides a communication method, including: A first network device corresponding to a first satellite sends a first message, where the first message indicates that a satellite that provides a service for a first cell is updated from the first satellite to a second satellite, the first message includes first information, the first information is used to determine a coverage area of a second cell served by the second satellite on the ground, and the first cell and the second cell have a same cell identifier.

In a possible implementation of this application, the first message includes a first time parameter and/or a second time parameter; the first time parameter is used to determine coverage start time of the second satellite corresponding to the second cell on the ground; and the second time parameter is used to determine coverage end time of the second satellite corresponding to the second cell on the ground.

In a possible implementation of this application, the first message further includes one or more of the following information: time information for performing, by a terminal, downlink synchronization in the second cell through the second satellite; NTN parameter information of the second satellite, where the NTN parameter information includes parameter information needed for a terminal to access the second cell; third indication information, where the third indication information indicates location information of NTN parameter information; or information about a measurement timing configuration, indicating a terminal to search, based on the measurement timing configuration, for a downlink synchronization signal of the second cell in the second satellite.

In a possible implementation of this application, the first message includes the information about the measurement timing configuration, and the measurement timing configuration is configured based on a downlink timing relationship of the first cell in the first satellite, or the measurement timing configuration is configured based on a downlink timing relationship of the second cell in the second satellite, and the downlink timing relationship is used to determine a $1^{st}$ subframe number and a $1^{st}$ system frame number of the downlink synchronization signal of the second cell.

In a possible implementation of this application, when the first network device determines that a first terminal that accesses the first cell is located outside the coverage area of the second cell on the ground, the method provided in this embodiment of this application further includes: The first network device sends a third message to the accessing first terminal, where the third message indicates the first terminal to switch to a target cell, the target cell and the first cell have different cell identifiers, and the first terminal is located within a coverage area of the target cell.

In a possible implementation of this application, the method provided in this embodiment of this application further includes: The first network device sends first configuration information and/or second configuration information to the first terminal, where the first configuration information is used by the first terminal to determine information about the target cell, and the second configuration information is used by the first terminal to determine a cell handover condition.

In a possible implementation of this application, one or both of the first configuration information and the second configuration information are determined based on location information of the first terminal and/or measurement report information of the first terminal, and the measurement report information includes information indicating signal quality of a neighboring cell of the first terminal.

In a possible implementation of this application, the method provided in this embodiment of this application further includes: The first network device receives a second message from the first terminal, where the first terminal is a terminal that accesses the first cell. The first network device determines, based on the second message, that the first terminal is located outside the coverage area of the second cell on the ground, or the first terminal is located within the coverage area of the second cell on the ground.

In a possible implementation of this application, the second message includes the location information of the first terminal, and that the first network device determines, based on the second message, that the first terminal is located outside the coverage area of the second cell on the ground, or the first terminal is located within the coverage area of the second cell on the ground includes: The first network device determines, based on the location information of the first terminal and the coverage area of the second cell on the ground, that the first terminal is located outside the coverage area of the second cell on the ground, or the first terminal is located within the coverage area of the second cell on the ground.

According to a third aspect, an embodiment of this application provides a communication apparatus. The communication apparatus can implement the method in any one of the first aspect or the possible implementations of the first aspect, and therefore can also achieve beneficial effects in any one of the first aspect or the possible implementations of the first aspect. The communication apparatus may be a terminal, or may be an apparatus that supports the terminal in implementing the method in any one of the first aspect or the possible implementations of the first aspect, for example, a chip used in the terminal. The communication apparatus may implement the foregoing method by using software or hardware, or by executing corresponding software by hardware.

In an example, an embodiment of this application provides a communication apparatus. The communication apparatus is a terminal or a chip used in the terminal. The communication apparatus includes a communication unit and a processing unit. The processing unit is configured to process information. The communication unit is configured to receive or send information. For example, the communication unit is configured to receive a first message from a first network device, where the first message indicates that a satellite that provides a service for a first cell is updated from a first satellite to a second satellite, the first cell is a cell accessed by the terminal, the first network device corresponds to the first satellite, the first message includes first information, the first information is used to determine a coverage area of a second cell served by the second satellite on the ground, and the first cell and the second cell have a same cell identifier. The processing unit is configured to determine whether the terminal is located within the coverage area or outside the coverage area based on the first message, a location of the terminal, and the coverage area of the second cell on the ground.

In a possible implementation of this application, the communication unit is further configured to send a second message to the first network device, where the second message indicates that the terminal is located within the coverage area of the second cell on the ground, or the second message indicates that the terminal is located outside the coverage area of the second cell on the ground.

In a possible implementation of this application, the communication unit is further configured to send location information of the terminal and/or measurement report information of the terminal to the first network device. The measurement report information includes information indicating signal quality of a neighboring cell of the terminal.

In a possible implementation of this application, if the terminal is located within the coverage area of the second cell served by the second satellite on the ground, the processing unit is further configured to perform downlink synchronization in the second cell, to synchronize with a second network device corresponding to the second cell, where the second network device corresponds to the second satellite.

In a possible implementation of this application, when the following first condition is met, the communication unit in this embodiment of this application is further configured to initiate a random access process to the second network device. The first condition includes any one or more of the following: before coverage end time of the first satellite on the ground; after coverage start time of the second satellite on the ground; data transmission is needed; or an uplink time alignment timer of the terminal does not expire.

In a possible implementation of this application, when a second condition is met, the communication unit does not need to initiate a random access process to the second network device. The second condition includes at least that an uplink time alignment timer of the terminal expires or an uplink time alignment timer of the terminal is not started.

In a possible implementation of this application, if the terminal is located outside the coverage area of the second cell served by the second satellite on the ground, the communication unit is further configured to receive a third message from the first network device, where the third message indicates the terminal to switch to a target cell, the target cell and the first cell have different cell identifiers, and the terminal is located within a coverage area of the target cell; and the processing unit is further configured to change a serving cell of the terminal from the first cell to the target cell based on the third message.

In a possible implementation of this application, the third message includes first configuration information, and the first configuration information is used by the terminal to determine information about the target cell. The processing unit is specifically configured to determine the information about the target cell based on the first configuration information. The processing unit is configured to change the serving cell of the terminal from the first cell to the target cell based on the information about the target cell.

In a possible implementation of this application, the third message includes second configuration information, and the second configuration information includes a cell handover condition configured for the terminal. When the cell handover condition included in the second configuration information is met, the processing unit is configured to change the serving cell of the terminal from the first cell to the target cell.

In a possible implementation of this application, the first message includes a first time parameter and/or a second time parameter; the first time parameter is used to determine coverage start time of the second satellite corresponding to the second cell on the ground; and the second time parameter is used to determine coverage end time of the second satellite corresponding to the second cell on the ground. The processing unit is further configured to synchronize, based on the first time parameter and/or the second time parameter, with the second network device corresponding to the second satellite after the coverage start time of the second satellite on the ground, or send the second message to the first network device before the coverage start time of the second satellite on the ground.

In a possible implementation of this application, the first message further includes one or more of the following information: time information for performing, by the terminal, downlink synchronization in the second cell; NTN parameter information of the second satellite, where the NTN parameter information includes parameter information needed for the terminal to access an NTN corresponding to the second satellite; third indication information indicating location information of NTN parameter information; or information about a measurement timing configuration, indicating the terminal to search, based on the measurement timing configuration, for a downlink synchronization signal of the second cell in the second satellite.

According to a fourth aspect, an embodiment of this application provides a communication apparatus. The communication apparatus can implement the method in any one of the second aspect or the possible implementations of the second aspect, and therefore can also achieve beneficial effects in any one of the second aspect or the possible implementations of the second aspect. The communication apparatus may be a first network device, or may be an apparatus that supports the first network device in implementing the method in any one of the second aspect or the possible implementations of the second aspect, for example, a chip used in the first network device. The communication apparatus may implement the foregoing method by using software or hardware, or by executing corresponding software by hardware.

In an example, an embodiment of this application provides a communication apparatus. The communication apparatus is a first network device or a chip used in the first network device. The communication apparatus includes a communication unit and a processing unit. The processing unit is configured to process information. The communication unit is configured to receive or send information. For example, the communication unit is configured to send a first message, where the first message indicates that a satellite that provides a service for a first cell is updated from a first satellite to a second satellite, the first message includes first information, the first information is used to determine a coverage area of a second cell served by the second satellite on the ground, and the first cell and the second cell have a same cell identifier.

In a possible implementation of this application, the first message includes a first time parameter and/or a second time parameter; the first time parameter is used to determine coverage start time of the second satellite corresponding to the second cell on the ground; and the second time parameter is used to determine coverage end time of the second satellite corresponding to the second cell on the ground.

In a possible implementation of this application, the first message further includes one or more of the following information: time information for performing, by a terminal, downlink synchronization in the second cell through the second satellite; NTN parameter information of the second satellite, where the NTN parameter information includes parameter information needed for a terminal to access the second cell; third indication information, where the third indication information indicates location information of NTN parameter information; or information about a measurement timing configuration, indicating a terminal to search, based on the measurement timing configuration, for a downlink synchronization signal of the second cell in the second satellite.

In a possible implementation of this application, the first message includes the information about the measurement timing configuration, and the measurement timing configuration is configured based on a downlink timing relationship of the first cell in the first satellite, or the measurement timing configuration is configured based on a downlink timing relationship of the second cell in the second satellite, and the downlink timing relationship is used to determine a $1^{st}$ subframe number and a $1^{st}$ system frame number of the downlink synchronization signal of the second cell.

In a possible implementation of this application, the communication unit is further configured to send a third message to an accessing first terminal, where the third message indicates the first terminal to switch to a target cell whose cell identifier is different from that of the first cell. The first terminal is located within a coverage area of the target cell.

In a possible implementation of this application, the communication unit is further configured to send first configuration information and/or second configuration information to the first terminal. The first configuration information is used by the first terminal to determine information about the target cell, and the second configuration information is used by the first terminal to determine a cell handover condition.

In a possible implementation of this application, one or both of the first configuration information and the second configuration information are determined based on location information of the first terminal and/or measurement report information of the first terminal, and the measurement report information includes information indicating signal quality of a neighboring cell of the first terminal.

In a possible implementation of this application, the communication unit is further configured to receive a second message from the first terminal, where the first terminal is a terminal accessing the first cell. The processing unit is further configured to determine, based on the second message, that the first terminal is located outside the coverage area of the second cell on the ground, or the first terminal is located within the coverage area of the second cell on the ground.

In a possible implementation of this application, the second message includes the location information of the first terminal, and the processing unit is specifically configured to determine, based on the location information of the first terminal and the coverage area of the second cell on the ground, that the first terminal is located outside the coverage area of the second cell on the ground, or the first terminal is located within the coverage area of the second cell on the ground.

According to a fifth aspect, an embodiment of this application provides a computer-readable storage medium. The computer-readable storage medium stores a computer program or instructions. When the computer program or the instructions are run on a computer, the computer is enabled to perform the communication method described in any one of the first aspect or the possible implementations of the first aspect.

According to a sixth aspect, an embodiment of this application provides a computer-readable storage medium. The computer-readable storage medium stores a computer program or instructions. When the computer program or the instructions are run on a computer, the computer is enabled to perform the communication method described in any one of the second aspect or the possible implementations of the second aspect.

According to a seventh aspect, an embodiment of this application provides a computer program product including instructions. When the instructions are run on a computer, the computer is enabled to perform the communication method described in any one of the first aspect or the possible implementations of the first aspect.

According to an eighth aspect, an embodiment of this application provides a computer program product including instructions. When the instructions are run on a computer, the computer is enabled to perform the communication method described in any one of the second aspect or the possible implementations of the second aspect.

According to a ninth aspect, an embodiment of this application provides a communication apparatus, configured to implement various methods in the possible designs of either of the first aspect and the second aspect. The communication apparatus may be the foregoing terminal, or an apparatus including the foregoing terminal, or a component (for example, a chip) used in the terminal. Alternatively, the communication apparatus may be the foregoing first network device, or an apparatus including the foregoing first network device, or the communication apparatus may be a component (for example, a chip) used in the first network device. The communication apparatus includes a corresponding module or unit for implementing the foregoing method. The module or the unit may be implemented by using hardware or software, or by executing corresponding software by hardware. The hardware or the software includes one or more modules or units corresponding to the foregoing functions.

According to a tenth aspect, an embodiment of this application provides a communication apparatus. The communication apparatus includes at least one processor and a communication interface. When the communication apparatus runs, the processor executes computer-executable instructions or a program stored in the communication apparatus, to enable the communication apparatus to perform the method in any one of the possible implementations of either of the first aspect and the second aspect. For example, the communication apparatus may be a terminal, or a component used in the terminal. For example, the communication apparatus may be a first network device, or a component used in the first network device.

It should be understood that the communication apparatus described in the tenth aspect may further include a bus and a memory. The memory is configured to store code and data. Optionally, the at least one processor, the communication interface, and the memory are coupled to each other.

According to an eleventh aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in any one of the possible implementations of either of the first aspect and the second aspect. For example, the communication apparatus may be a terminal, or a chip used in the terminal.

According to a twelfth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in any one of the possible designs of either of the first aspect and the second aspect. For example, the communication apparatus may be a first network device, or a chip used in the first network device.

It should be understood that the memory described in any one of the tenth aspect to the twelfth aspect may alternatively be replaced with a storage medium. This is not limited in embodiments of this application. In a possible implementation, the memory described in any one of the tenth aspect to the twelfth aspect may be a memory inside the communication apparatus. Certainly, the memory may alternatively be located outside the communication apparatus, but the at least one processor can still execute the computer-executable instructions or the program stored in the memory.

According to a thirteenth aspect, an embodiment of this application provides a communication apparatus. The communication apparatus includes one or more modules, configured to implement the method in either of the first aspect and the second aspect, and the one or more modules may correspond to the steps in the method in either of the first aspect and the second aspect.

According to a fourteenth aspect, an embodiment of this application provides a chip. The chip includes a processor and a communication interface. The communication interface is coupled to the processor, and the processor is configured to run a computer program or instructions, to implement the communication method described in the first aspect or the possible implementations of the first aspect. The communication interface is configured to communicate with a module other than the chip.

According to a fifteenth aspect, an embodiment of this application provides a chip. The chip includes a processor and a communication interface. The communication interface is coupled to the processor, and the processor is configured to run a computer program or instructions, to implement the communication method described in the second aspect or the possible implementations of the second aspect. The communication interface is configured to communicate with a module other than the chip.

Specifically, the chip provided in this embodiment of this application further includes a memory, configured to store the computer program or the instructions.

According to a sixteenth aspect, an embodiment of this application provides a communication system. The communication system includes a terminal and a first network device. The first network device is configured to perform the communication method in any one of the second aspect or the possible implementations of the second aspect. The terminal is configured to perform the communication method in any one of the first aspect or the possible implementations of the first aspect.

Any apparatus, computer storage medium, computer program product, chip, or communication system provided above is configured to perform a corresponding method provided above. Therefore, for beneficial effects that can be achieved by the apparatus, the computer storage medium, the computer program product, the chip, or the communication system, refer to beneficial effects of a corresponding solution in the corresponding method provided above. Details are not described herein again.

**BRIEF DESCRIPTION OF DRAWINGS**

FIG. 1 shows two deployment solutions of an identifier of a cell in a satellite according to an embodiment of this application;

FIG. 2 is a diagram of an architecture of a communication system according to an embodiment of this application;

FIG. 3 is a diagram of an architecture of another communication system according to an embodiment of this application;

FIG. 4 is a distribution diagram of a base station according to an embodiment of this application;

FIG. 5 is a diagram of an architecture of a transparent satellite communication system according to an embodiment of this application;

FIG. 6 is a diagram of an architecture of another satellite communication system according to an embodiment of this application;

FIG. 7 is a diagram of an architecture of still another satellite communication system according to an embodiment of this application;

FIG. 8 is a diagram of an architecture of yet another satellite communication system according to an embodiment of this application;

FIG. 9 is a schematic flowchart of a communication method according to an embodiment of this application;

FIG. 10 is a schematic flowchart of another communication method according to an embodiment of this application;

FIG. 11 is a diagram of a structure of a communication apparatus according to an embodiment of this application;

FIG. 12 is a diagram of a structure of another communication apparatus according to an embodiment of this application; and

FIG. 13 is a diagram of a structure of a chip according to an embodiment of this application.

## DESCRIPTION OF EMBODIMENTS

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions in this application may be applied to various communication systems, for example, a long term evolution (long time evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a public land mobile network (public land mobile network, PLMN) system, a device-to-device (device-to-device, D2D) network system, a machine-to-machine (machine-to-machine, M2M) network system, and a future 5G communication system.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In terrestrial communication, one network device (for example, a base station) may cover one or more cells. Generally, cell identifiers (physical cell identifiers, PCIs) and broadcast area identifiers (for example, tracking area codes (tracking area codes, TACs) or tracking area identifiers (tracking area identifiers, TAIs)) of these cells remain unchanged in very long time. However, in satellite communication, because a satellite moves at a high speed, a physical area (for example, a cell) covered by the satellite on the ground is changing. Currently, the following deployment solutions are used for a cell identifier and a broadcast area identifier of the satellite:

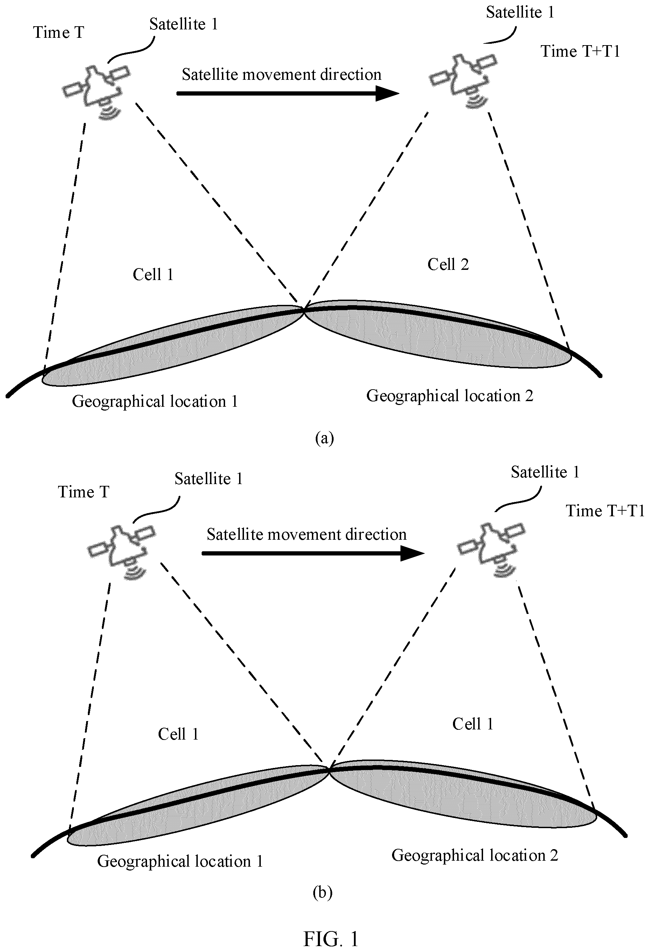

Solution (1): As shown in (a) in FIG. 1, an association relationship between a cell identifier and a physical area is established. To be specific, for a physical area, a cell identifier and a broadcast area identifier that correspond to the physical area remain unchanged. After a satellite (a satellite 1 for short) moves, another satellite (a satellite 2 for short) provides a service for the physical area. A cell identifier and a broadcast area identifier of the satellite 2 are the same as those of the satellite 1. A main advantage of this solution is that, for a physical area, it is assumed that a location of UE (user equipment, user equipment, also referred to as a terminal) remains unchanged. Because the terminal senses that cells remain unchanged, a network device does not need to trigger a cell handover process for a terminal, to reduce a quantity of handover times in a network and reduce signaling overheads of an air interface. In this solution, generally, a satellite always serves a physical area within a time period (that is, the satellite always covers the physical area). When the satellite cannot provide a service for the physical area due to movement of the satellite, another satellite provides a service for the physical area. As shown in (a) in FIG. 1, when the satellite 1 is at a geographic location 2 at time T+T1, a cell identifier of a cell included in a coverage area on the ground is a cell 2, and when the satellite 1 is at a geographic location 1 at time T, a cell identifier of a cell included in a coverage area on the ground is a cell 1.

Solution (2): As shown in (b) in FIG. 1, a cell identifier is associated with a satellite. When a coverage area of the satellite changes due to movement of the satellite, a cell identifier of the satellite remains unchanged. In this solution, it may be understood that a cell identifier is scanned in a physical coverage area as the satellite moves. In this solution, even if a location of a terminal remains unchanged, because of movement of a satellite, when a coverage area of the satellite on the ground cannot cover the terminal, a network side needs to notify the terminal to perform handover, to switch to another cell. As shown in (b) in FIG. 1, because a cell identifier is associated with a satellite, when a satellite 1 is at a geographic location 2 at time T+T1, a cell identifier of a cell included in a coverage area on the ground is a cell 1, and when the satellite 1 is at a geographic location 1 at time T, a cell identifier of a cell included in a coverage area on the ground is the cell 1. In (b) in FIG. 1, although cells served by the satellite 1 at different geographic locations have a same cell identifier, coverage areas of the cells at the different geographic locations may be different.

In a new radio (new radio, NR) system, an NTN is introduced. In the NTN, a base station or some functions of the base station are deployed on a high-altitude platform or a satellite to provide seamless coverage for a terminal. Because a satellite moves around the earth, and a terminal also moves relative to the earth, a satellite corresponding to a cell accessed by a terminal that currently uses a network service changes from one satellite to another satellite. To ensure communication continuity and service quality, the terminal needs to sense alternation of a new satellite and an old satellite, and determine whether the terminal is located within a coverage area of a cell served by the new satellite on the ground.

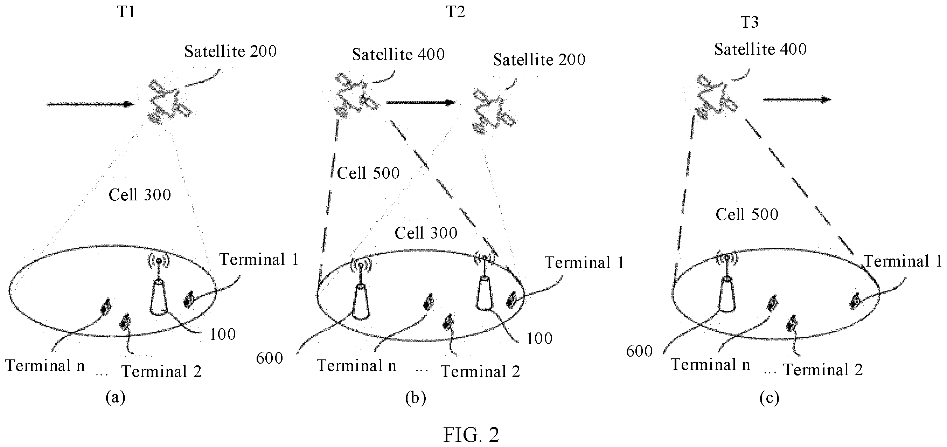

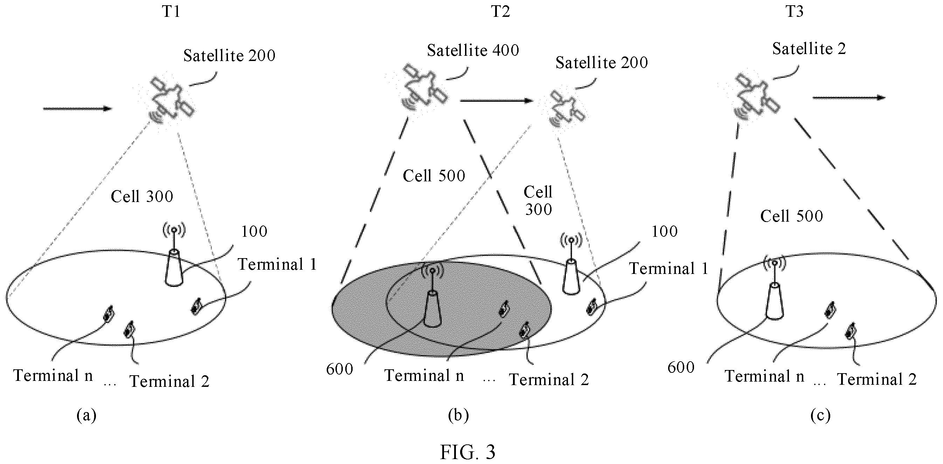

As shown in FIG. 2 or FIG. 3, an embodiment of this application provides a communication system. The communication system includes one or more terminals (for example, a terminal 1 to a terminal n), a network device 100, and a satellite 200. The terminal accesses a cell 300, and the cell 300 is one of one or more cells covered by the network device 100. The cell 300 is served by the satellite 200, or the cell 300 may be a cell covered by the satellite 200 on the ground.

The terminal is located on the surface of the earth, and the satellite 200 and the following satellite 400 are located in the earth orbit. The satellite 200 or the satellite 400 may provide a communication service for a physical area (for example, the cell 300 or a cell 500) covered by a signal, and may communicate with a terminal located within the physical area covered by the signal.

In an example, a satellite generally generates one or more beams (beams, also referred to as beam footprints) on the ground, and the one or more beams form a cell on the ground.

In satellite communication, because a satellite moves at a high speed, a physical area covered by the satellite on the ground is changing. Therefore, coverage areas of a same satellite on the ground may be different in different time periods. It is assumed that the satellite 200 serves the cell 300 in a first time period. Start time of the first time period is coverage start time of the satellite 200 on the ground, and end time of the first time period is coverage end time of the satellite 200 on the ground. The network device 100 corresponds to the satellite 200 in the first time period.

As shown in (a) in FIG. 2 or (a) in FIG. 3, at a moment T1 (belonging to the first time period), the cell 300 is covered by the satellite 200. To be specific, a coverage area of the satellite 200 on the ground at the moment T1 includes a coverage area of the cell 300 on the ground. Because of movement of the satellite 200, at a moment T2, the satellite 400 moves to a location that can cover the cell 300, and the satellite 200 gradually moves to a location that is away from the cell 300. As shown in (b) in FIG. 2, the satellite 400 may cover a coverage area of the cell 300 on the ground, or it may be considered that a coverage area of the cell 500 covered by the satellite 400 on the ground is the same as a coverage area of the cell 300. Finally, as the satellite 200 moves, a coverage area of the satellite 200 on the ground no longer includes the coverage area of the cell 300. As shown in (c) in FIG. 2, at a moment T3, a coverage area of the cell 300 is covered by the satellite 400, or it may be considered that the cell 500 covered by the satellite 400 on the ground at the moment T3 is the cell 300.

It may be understood that when the satellite 200 provides a service for the cell 300, the cell 300 may be one of one or more cells covered by the network device 100. In this case, any one of the terminal 1 to the terminal n may communicate with the satellite 200 via the network device 100. When the satellite 400 provides a service for the cell 500, the cell 500 may be one of one or more cells covered by a network device 600. In this case, any one of the terminal 1 to the terminal n may communicate with the satellite 200 via the network device 600. Certainly, the network device 100 and the network device 600 may be a same network device. To be specific, although a satellite that provides a service for a cell changes, a network device accessed by the terminal remains unchanged.

In an example, the network device 600 and the network device 100 may be a same network device. To be specific, although a satellite that provides a service for the cell 300 changes from the satellite 200 to the satellite 400, a network device to which the cell 300 belongs remains unchanged. In another example, the network device 600 and the network device 100 are different network devices. To be specific, a satellite that provides a service for the cell 300 changes from the satellite 200 to the satellite 400, and a network device to which the cell 300 belongs also changes.

It should be noted that when cells served by the satellite 400 and the satellite 200 have a same cell identifier, a coverage area of the cell 500 served by the satellite 400 on the ground may be the same as a coverage area of the cell 300 served by the satellite 200 on the ground, as shown in (b) in FIG. 2. However, a scenario shown in (b) in FIG. 3 may exist. A coverage area of the cell 500 served by the satellite 400 on the ground is different from a coverage area of the cell 300 served by the satellite 200 on the ground. For example, there is an intersection of the coverage areas. Certainly, there may be no intersection of the coverage area of the cell 500 served by the satellite 400 on the ground and the coverage area of the cell 300 served by the satellite 200 on the ground. In conclusion, a difference between FIG. 2 and FIG. 3 lies in the following: In FIG. 2, a satellite of the cell 300 changes from the satellite 200 to the satellite 400, but the coverage area of the cell 500 covered by the satellite 400 on the ground is the same as the coverage area of the cell 300 served by the satellite 200 on the ground. It may be understood that the cell 500 and the cell 300 are a same cell and have a same cell identifier. In the system shown in FIG. 3, the satellite of the cell 300 changes from the satellite 200 to the satellite 400. However, a coverage area of the cell 500 covered by the satellite 400 on the ground is different from a coverage area of the cell 300 served by the satellite 200 on the ground. For example, the terminal 1 is located outside the coverage area of the cell 500 on the ground, and the terminal 2 to the terminal n are located within the coverage area of the cell 500 on the ground.

(c) in FIG. 2 and (c) in FIG. 3 are diagrams in which the satellite 2 covers the cell 500 after the satellite 1 leaves.

In a possible embodiment of this application, the communication system shown in FIG. 2 or FIG. 3 may further include a core network device (not shown). The core network device is a device in a core network (core network, CN) that provides service support for a terminal. Currently, examples of some core network devices are: an access and mobility management function (access and mobility management function, AMF) entity, a session management function (session management function, SMF) entity, and a user plane function (user plane function, UPF) entity, which are not listed one by one herein. The AMF entity may be responsible for access management and mobility management of a terminal. The SMF entity may be responsible for session management, for example, user session establishment. The UPF entity may be a function entity on a user plane, and is mainly responsible for connecting to an external network. It should be noted that, an entity in this application may also be referred to as a network element or a function entity. For example, the AMF entity may also be referred to as an AMF network element or an AMF function entity. For another example, the SMF entity may also be referred to as an SMF network element or an SMF function entity.

Specifically, the satellite in embodiments of this application may be considered as a spacecraft carrying a transparent payload (it could also be bent pipe payload) or a regenerative payload (regenerative payload) signal transmitter. The satellite usually runs in a low earth orbit (low earth orbit, LEO) at an altitude from 300 kilometers (km) to 1500 km, in a medium earth orbit (medium earth orbit, MEO) at an altitude from 7000 km to 25000 km, in a geostationary earth orbit (geostationary earth orbit, GEO) at an altitude of 35786 km, or a high elliptical orbit (high elliptical orbit, HEO) at an altitude from 400 km to 50000 km. In other words, satellites may be classified into an LEO satellite, an MEO satellite, a GEO satellite, an HEO satellite, and the like based on different orbital altitudes.

The terminal in embodiments of this application is also referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, examples of some terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), and a wireless terminal in a smart home (smart home).

The network device in embodiments of this application is a radio access network (radio access network, RAN) node (or device) that connects a terminal to a wireless network, and may also be referred to as a base station. The network device may be a base transceiver station (base transceiver station, BTS) in a global system for mobile communications (global system for mobile communications, GSM) system or a code division multiple access (code division multiple access, CDMA) communication system, a NodeB (NodeB, NB) in a wideband code division multiple access (wideband code division multiple access, WCDMA) communication system, an evolved NodeB (evolved NodeB, eNB or eNodeB) in a long term evolution (long term evolution, LTE) communication system, or a base station (next Generation NodeB, gNB) in a new radio communication system. The network device may alternatively be an access point (access point, AP) in a wireless local area network (Wireless Local Area Network, WLAN), a relay station, a network device in a future evolved public land mobile network (Public Land Mobile Network, PLMN), a network device in an NTN communication system, or the like.

Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), and a wireless fidelity (wireless fidelity, Wi-Fi) access point (access point, AP).

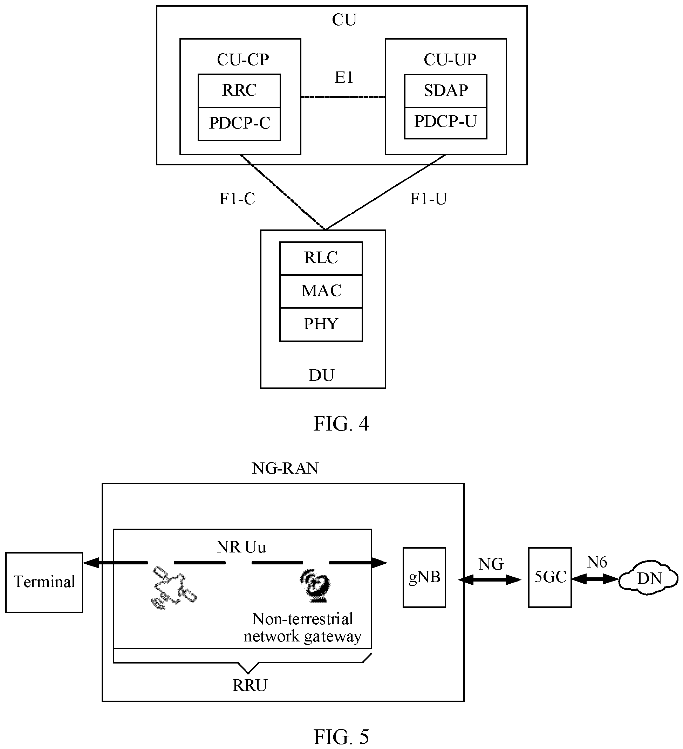

In addition, in a network structure, as shown in FIG. 4, the network device may include a central unit (central unit, CU) node, a distributed unit (distributed unit, DU) node, or a RAN device including a CU node and a DU node. The RAN device including the CU node and the DU node splits protocol layers of a gNB in an NR system. Functions of some protocol layers are controlled by the CU in a centralized manner. Functions of some or all of remaining protocol layers are distributed in the DU, and the CU controls the DU in a centralized manner. Optionally, as shown in FIG. 4, the CU may be further divided into a control plane (CU-CP) and a user plane (CU-UP). The CU-CP is responsible for a control plane function, and mainly includes an RRC layer and a packet data convergence protocol (packet data convergence protocol, PDCP) layer that corresponds to the control plane, that is, a PDCP-C. The PDCP-C is mainly responsible for data encryption and decryption, integrity protection, data transmission, and the like on the control plane. The CU-UP is responsible for a user plane function, and mainly includes a service data adaptation protocol (service data adaptation protocol, SDAP) layer and a PDCP layer that corresponds to the user plane (that is, a PDCP-U). The SDAP layer is mainly responsible for processing data of the core network and mapping a flow to a bearer. The PDCP-U is responsible for encryption and decryption, integrity protection, header compression, sequence number maintenance, data transmission, and the like on a data plane. The CU-CP and the CU-UP are connected through an E1 interface. On behalf of the gNB, the CU-CP is connected to the core network through an NG interface, and is connected to the DU through an F1 interface-control plane, namely, F1-C. The CU-UP is connected to the DU through an F1 interface-user plane, namely, F1-U. Certainly, in another possible implementation, the PDCP-C is alternatively in the CU-UP.

Currently, TR38.821 defines five NTN-based RAN architectures (NTN-based NG-RAN architectures). A method provided in embodiments of this application is applicable to any one of the following architectures.

An architecture 1 shown in FIG. 5 is an architecture of a communication system with a transparent satellite (RAN architecture with transparent satellite) according to an embodiment of this application. The architecture 1 includes a terminal, an access network node (NG-RAN), a 5G core network (5GC), and a data network (data network, DN).

The NG-RAN includes a remote radio unit (remote radio unit, RRU) and a gNB. The RRU includes a satellite and an NTN gateway (gateway).

The terminal, the non-terrestrial network gateway, and the gNB are located on the surface of the earth, and the satellite is located in the earth orbit. In addition, the satellite, the non-terrestrial network gateway, and the gNB may be used as a 5G radio access network (NG-radio access network, NG-RAN), and the NG-RAN is connected to the 5G core network through a second interface (for example, an NG interface).

In the architecture 1, the terminal communicates with the gNB through a first interface (for example, NR Uu). The 5G core network communicates with the data network through an N6 interface.

In a transparent scenario, functions of a satellite are radio frequency filtering (Radio Frequency filtering) and frequency conversion and amplification (Frequency conversion and amplification). That is, the satellite is mainly used as an L1 relay (relay) to regenerate a physical layer signal and does not have other higher protocol layers.

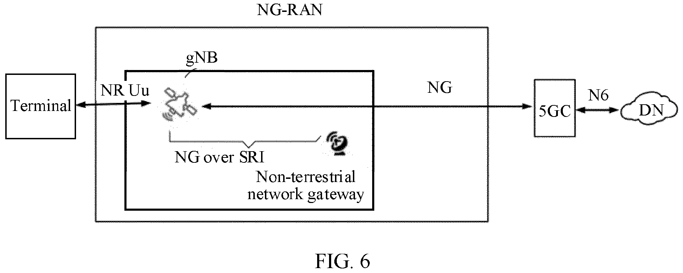

Architecture 2 shown in FIG. 6: A difference between the architecture 2 and the architecture 1 lies in that, in the architecture 2, an NG-RAN includes a gNB, the gNB is a satellite, the satellite communicates with a terminal through a first interface, and there is a second interface between the satellite and a 5G core network.

There is a regenerative satellite without an inter-satellite link and with a processing function of a base station (Regenerative satellite without ISL, gNB processed payload) in the architecture 2, where a link between satellites is an inter-satellite link (inter-satellite link, ISL). In this architecture, the satellite is used as a gNB.

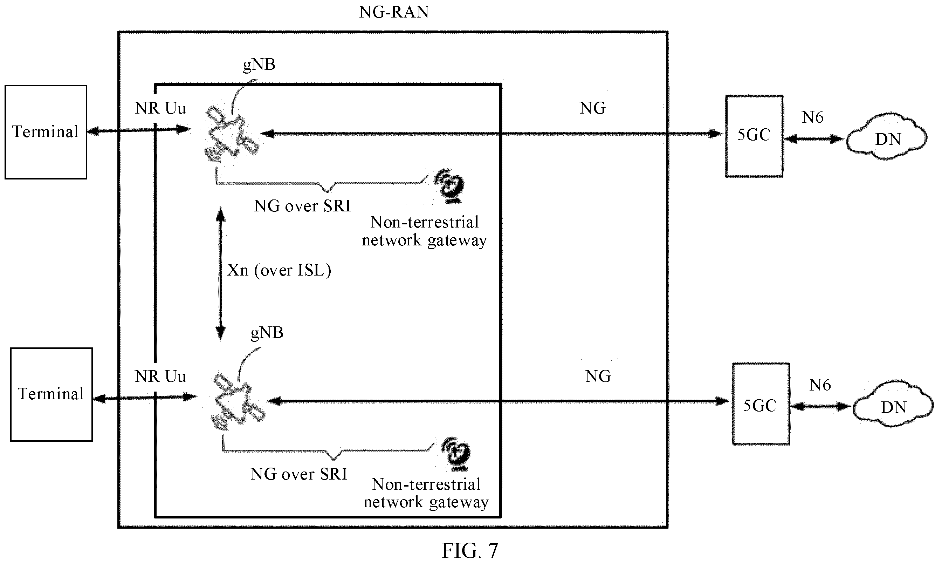

Architecture 3 shown in FIG. 7: A common point between the architecture 3 and the architecture 2 lies in that a satellite is used as a gNB. However, a difference between the architecture 3 and the architecture 2 lies in that an ISL exists in a scenario shown in the architecture 3.

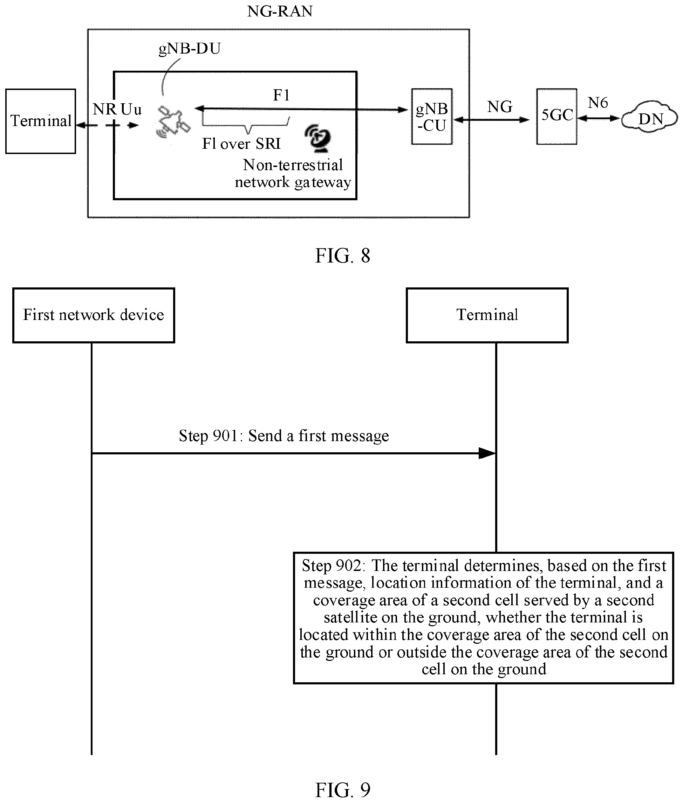

Architecture 4 shown in FIG. 8: A difference between the architecture 4 and the architecture 1 lies in that an access network node (NG-RAN) in the architecture 4 includes a satellite and a network device. The satellite is used as a gNB-DU, the network device is used as a gNB-CU, the gNB-DU communicates with the gNB-CU through an F1 interface, and the terminal communicates with the gNB-DU through a first interface.

Architecture 4: There is a regenerative satellite with a DU processing function of a base station (NG-RAN with a regenerative satellite based on gNB-DU). In this scenario, the satellite is used as a DU.

Architecture 5: There is a base station with an IAB function (gNB processed payload based on relay-like architectures). In this scenario, a satellite is used as a relay node (integrated access and backhaul, IAB).

In terrestrial communication, in some scenarios (for example, because some parameters configured by a network side for a terminal need to be changed, or a network side needs to change a key allocated to the terminal), the network side triggers the terminal to perform intra-cell handover. To be specific, although a cell accessed by the terminal remains unchanged, the network side needs the terminal to re-access the cell. Generally, the network side sends a handover command (for example, referred to as a reconfiguration with sync message) to the terminal, and the terminal performs random access in the cell again based on the handover command (where it is noted that, a current protocol requires that the terminal needs to perform random access, and the terminal may not need to perform random access in subsequent protocol evolution). According to the current protocol, in a handover scenario, a formula for calculating interruption time caused by a handover is used. The formula includes time Tsearch for searching for a target cell. If the target cell is known, Tsearch = 0; otherwise, a value of Tsearch is specified in the protocol.

In satellite communication, in some other scenarios, a network side also notifies a terminal to perform intra-cell handover (where for example, because a location of the terminal changes, the terminal enters one country from another country, and different countries use different core networks, the network side needs to select a new core network for the terminal; therefore, the network side triggers intra-cell handover).

For the deployment solution 1 shown in (a) in FIG. 1, because an old satellite (a first satellite below) moves, a new satellite (a second satellite below) provides a service only after the old satellite cannot provide a service for a physical area on the ground (where a coverage area of the satellite is a physical area of the satellite on the surface of the ground). Generally, services are provided by other satellites in a same orbit. Due to a spacing between satellites, a distance between two satellites is long. Because a distance from a new satellite to a terminal is different from a distance from an old satellite to the terminal, downlink signals received by the terminal from a same cell are asynchronous, and uplink signals of the terminal arrive at the two satellites at different moments (where it is noted that the downlink signal asynchronization herein means that a moment at which the terminal detects a downlink pilot signal changes, or a start point or an end point of a frame number, a subframe number, a slot number, or a symbol detected by the terminal changes). However, when the new satellite provides coverage, if the terminal is not located within a coverage area of a cell served by the new satellite on the ground, the terminal may fail to perform downlink synchronization with the new satellite when the new satellite provides the coverage. In this case, subsequently, the terminal cannot correctly receive the downlink signal sent in the current cell in the satellite, and the terminal cannot successfully send the uplink signal to the cell served by the new satellite. As shown in FIG. 3 or FIG. 2, when a cell 500 covered by a new satellite (for example, the satellite 400) on the ground and a cell 300 covered by an old satellite (for example, the satellite 200) on the ground have a same cell identifier, a coverage area of the cell 500 covered by the satellite 400 on the ground and a coverage area of the cell 300 may be the same (as shown in FIG. 2) or may be different (as shown in FIG. 3). Therefore, how to enable any one of the terminal 1 to the terminal n in the accessed cell 300 to determine whether the terminal is located within the coverage area of the cell 500 covered by the satellite 400 on the ground is a technical problem that needs to be urgently resolved in this application.

In embodiments of this application, a specific structure of an execution entity of a communication method is not specially limited in embodiments of this application, provided that the execution entity can run a program that records code of the communication method in embodiments of this application, to perform communication according to the communication method in embodiments of this application. For example, the execution body of the communication method provided in embodiments of this application may be a function module that is in a first network device and that can invoke a program and execute the program, or may be a communication apparatus, for example, a chip, used in the first network device. The execution body of the communication method provided in embodiments of this application may be a function module that is in a terminal and that can invoke and execute a program, or may be a communication apparatus, for example, a chip, used in the terminal. This is not limited in this application. The following embodiments are described by using an example in which execution entities of a communication method are a first network device and a terminal.

FIG. 9 is a schematic interaction flowchart of a non-terrestrial network communication method according to an embodiment of this application. The method includes the following steps.

Step 901: A first network device corresponding to a first satellite sends a first message. Correspondingly, a terminal receives the first message from the first network device. The first network device is a network device to which a first cell belongs, and the first cell is a cell accessed by the terminal.

The first message indicates that a satellite that provides a service for the first cell is updated from a first satellite to a second satellite. Alternatively, the first message indicates, to the terminal, that a satellite that provides a service for the first cell is to change, that is, indicates alternation of a new satellite and an old satellite.

Optionally, the first network device corresponds to the first satellite. As shown in FIG. 5 or FIG. 6, the first satellite is the first network device, for example, a base station. For example, as shown in FIG. 8, the first network device is a gNB-CU, and the first satellite is a gNB-DU.

In a possible implementation of this application, to help the terminal determine whether the terminal is located within a coverage area of a second cell served by the second satellite on the ground, the first message may carry first information. The first information indicates the coverage area of the second cell served by the second satellite on the ground. The second cell and the first cell have a same cell identifier. Alternatively, it may be understood that the first cell and the second cell are a same cell, that is, the first cell and the second cell are the same.

In an example, the first information may be information about a physical area covered by the second cell served by the second satellite on the ground. The information about the physical area is used to determine the coverage area of the second cell served by the second satellite on the ground. Optionally, the first information may be coverage area parameter information of the second cell. For example, the information about the physical area covered by the second cell served by the second satellite on the ground may be represented by using a reference point and a radius (or a distance threshold), or may be represented by using a series of coordinate points.

It may be understood that a coverage area of the first cell is almost included in a coverage area of the second satellite on the ground. For example, the second satellite may serve one or more cells, that is, the coverage area of the second satellite on the ground includes one or more cells. That the one or more cells include the second cell may be understood as that a cell identifier of the second satellite is the same as the cell identifier of the first cell.

In an example, the terminal in this embodiment of this application may be a terminal in a radio resource control (radio resource control, RRC)_connected (connected) state, or may be a terminal in an RRC_idle (IDLE)/RRC_inactive (INACTIVE) state.

The terminal may be any terminal that accesses the first cell.

In a possible implementation of this application, step 901 may be implemented in the following manner: The first network device broadcasts the first message to the terminal, that is, the first message is a broadcast message sent by the first network device. In this way, a plurality of terminals accessing the first cell or a plurality of terminals located in the first cell may receive the first message, so that the terminal may determine that a satellite serving the first cell is to change. For example, terminals accessing the first cell include a terminal A and a terminal B, and the first message is sent in a broadcast manner. In this way, the first network device may send a broadcast message once, so that the terminal A and the terminal B sense that a satellite that provides a service for the first cell is updated from the first satellite to the second satellite, and sense the coverage area of the second cell served by the second satellite on the ground.

In another possible implementation of this application, step 901 may be implemented in the following manner: The first message sent by the first network device to the terminal is a dedicated message. That is, the first network device sends the first message to a specific terminal in the first cell by using a dedicated message. For example, the first message may be an RRC message or a medium access control (medium access control, MAC) message. In this scenario, if terminals accessing the first cell include a terminal A and a terminal B, the first network device may send the first message to the terminal A, or may send the first message to the terminal B.

Step 902: The terminal determines, based on the first message, a location of the terminal and the coverage area of the second cell served by the second satellite on the ground, whether the terminal is located within the coverage area of the second cell on the ground or outside the coverage area of the second cell on the ground.

In an example, with reference to FIG. 2, the first network device may be the network device 100. The first satellite may be the satellite 200. The first cell may be the cell 300. The second satellite may be the satellite 400. The second cell may be the cell 500.

It may be understood that, after receiving the first message, the terminal may determine, in real time or periodically, whether the location of the terminal is within the coverage area of the second cell on the ground.

Optionally, when the first message does not carry the first information, and the terminal determines, by using the first message, that the satellite serving the first cell changes, the terminal may alternatively request the first network device to provide, for the terminal, the coverage area of the second cell served by the second satellite on the ground.

This embodiment of this application provides the communication method. In the method, when it is determined that the satellite that provides a service for the first cell is updated from the first satellite to the second satellite, that is, during alternation of a new satellite and an old satellite, the first network device sends the first message to the terminal. Because the first message indicates, to the terminal, that the satellite that provides a service for the first cell is updated from the first satellite to the second satellite, the terminal can sense that the satellite that covers the first cell changes. The second satellite serves the second cell, and the first cell and the second cell have the same cell identifier. Although the first cell and the second cell have the same cell identifier, coverage areas of the first cell and the second cell on the ground may be different. The terminal may be located outside the coverage area of the second cell on the ground, or may be located within the coverage area of the second cell on the ground. Therefore, to avoid communication interruption caused by a case in which the terminal cannot normally access the second cell when the terminal is located outside the coverage area of the second cell, in this application, the first network device sends, to the terminal, information about the coverage area of the second cell served by the second satellite on the ground, so that the terminal can further determine, with reference to the location of the terminal, whether the terminal is located within the coverage area of the second cell on the ground or outside the coverage area, and take an appropriate processing measure.

In a possible embodiment of this application, before step 901, the method provided in this embodiment of this application may further include: The first network device determines that the satellite that provides a service for the first cell is updated from the first satellite to the second satellite.

In a possible implementation, that the first network device determines that the satellite that provides a service for the first cell is updated from the first satellite to the second satellite may be implemented in the following manner: An operator sends information about the second satellite to the first network device. Alternatively, a satellite control function of the second satellite sends ephemeris information of the second satellite to the first network device (base station); or a satellite control function of the second satellite sends ephemeris information of the second satellite to a core network, and then the core network forwards the ephemeris information of the second satellite to the first network device (base station).

In another possible implementation, a second network device (for example, a second base station) corresponding to the second satellite sends information about the second satellite to the first network device (for example, a first base station) corresponding to the first satellite.

In a possible implementation of this application, the first message may further carry seventh indication information. The seventh indication information indicates the terminal to determine whether the location of the terminal is within the coverage area of the second cell served by the second satellite on the ground. In this way, after receiving the seventh indication information, the terminal may perform an action of determining whether the terminal is located within the coverage area of the second cell on the ground. Certainly, the seventh indication information may be carried in a message other than the first message. This is not limited in embodiments of this application. In another possible implementation of this application, the first message does not need to carry seventh indication information. After receiving the first message, the terminal may perform, based on the first information, an action of determining whether the terminal is located within the coverage area of the second cell on the ground.

In a possible implementation of this application, the first network device does not need to perform indication on the terminal, and after receiving the first information, the terminal actively reports, to the first network device, a result of determining whether the terminal is located within the coverage area of the second cell on the ground. In another possible implementation, the first network device may alternatively indicate the terminal to report a result of determining whether the terminal is located within the coverage area of the second cell on the ground. For example, the first message may carry indication information x, or the first network device sends a message other than the first message to the terminal, to notify the terminal to report the determining result. For example, the indication information x indicates the terminal to report the determining result when the terminal is located outside the coverage area of the second cell on the ground. In this way, if the first network device does not receive the determining result reported by the terminal, the first network device may determine that the terminal is located within the coverage area of the second cell on the ground. Certainly, when receiving the determining result from the terminal, the first network device may determine that the terminal is located outside the coverage area of the second cell on the ground. Alternatively, the indication information x indicates the terminal to report the determining result when the terminal is located within the coverage area of the second cell on the ground. Alternatively, the indication information x indicates that the terminal needs to report the determining result regardless of whether the location of the terminal is within or outside the coverage area of the second satellite. The first network device sends, to the terminal, the indication information x or a message for notifying the terminal whether to report the result of determining whether the terminal is located within the coverage area of the second cell, so that the terminal performs a corresponding action based on an indication from the first network device. Alternatively, the indication information x indicates the terminal to perform reporting when the determining result is a first determining result, and perform no reporting when the determining result is a second determining result. For example, the first determining result is different from the second determining result. For example, the first determining result is that the terminal is located within the coverage area of the second satellite on the ground. The second determining result is that the terminal is located outside the coverage area of the second satellite on the ground.

In a possible implementation, after receiving the first information, the terminal may actively report the location information of the terminal to the first network device. In another possible implementation, the terminal reports the location information of the terminal to the first network device when triggered by the first network device. For example, the first network device may further indicate, by using indication information y, the terminal to report the location information of the terminal. The indication information y is carried in the first message or a message other than the first message. This is not limited in embodiments of this application.

It may be understood that the first network device may send both indication information a and the indication information y to the terminal.

In a possible implementation of this application, when the terminal obtains coverage end time of the first satellite on the ground, the terminal may further send a request message to the first network device before the coverage end time of the first satellite on the ground, to request information about the second cell covered by the second satellite on the ground.

In a possible implementation of this application, time at which the first network device sends the first message to the terminal is earlier than coverage start time of the second satellite serving the second cell on the ground. The coverage start time indicates time at which the second satellite corresponding to the second cell starts to cover, on the ground, a physical area (including the first cell) of the first cell corresponding to the first satellite.

An example is used for description. When the first network device determines the coverage start time of the second satellite corresponding to the second cell, assuming that the terminal still accesses the first cell before the coverage start time of the second satellite corresponding to the second cell, and assuming that downlink data/signaling transmission is needed between the first network device and the terminal, the first network device may send the first message to the terminal in a process of sending downlink data/signaling to the terminal. Assuming that no downlink data/signaling transmission is needed between the first network device and the terminal before the coverage start time of the second satellite corresponding to the second cell, the first network device may choose to send the first message to the terminal at any time or when the terminal is in the RRC connected state.

In a possible embodiment of this application, the first message may be a predefined message specially used to notify the terminal that the satellite serving the cell is updated. In this way, the terminal may learn, after receiving the first message, that satellite alternation is to occur. Certainly, the first message may alternatively be an existing message between the terminal and the first network device. This is not limited in embodiments of this application.

In another possible embodiment of this application, the first message includes first indication information, and the first indication information indicates that the satellite that provides a service for the first cell is updated from the first satellite to the second satellite, or the satellite serving the first cell is to change. In this way, for the terminal, the terminal may determine, based on the first indication information, that the satellite of the first cell accessed by the terminal is updated from the first satellite to the second satellite. This manner may be considered as that the first network device indicates to the terminal in an explicit manner. Certainly, the first message may be the first indication information, or the first indication information is a field in the first message. This is not limited in embodiments of this application. Optionally, the first indication information may be information about the physical area covered by the second cell served by the second satellite on the ground.

Certainly, in addition to indicating, to the terminal in an explicit manner, that satellite alternation is to occur, the first network device may further indicate, to the terminal in an implicit indication manner, that satellite alternation is to occur.

In an example of an implicit indication, the first message in this embodiment of this application may further include one or more of the following parameters: a first time parameter, a second time parameter, time information for performing, by the terminal, downlink synchronization in the second cell via the second satellite, NTN parameter information of the second satellite, third indication information, or information about a measurement timing configuration.

The first time parameter is used to determine the coverage start time of the second satellite serving the second cell on the ground. The second time parameter is used to determine the coverage end time of the second satellite serving the second cell on the ground. In this way, after receiving the first time parameter and/or the second time parameter, the terminal may determine the coverage start time and the coverage end time of the second satellite on the ground. Then, the terminal may synchronize with the second network device corresponding to the second satellite after the coverage start time of the second satellite on the ground, or send the second message or a fourth message to the first network device before the coverage start time of the second satellite on the ground.

Certainly, when the terminal knows the coverage end time of the second satellite on the ground, assuming that the terminal subsequently performs communication via the second satellite, the terminal may further obtain, from the second network device corresponding to the second satellite before the coverage end time of the second satellite on the ground, information about an updated satellite of the second cell and/or a coverage area of an updated cell covered by the satellite.

In an example, the first time parameter is the coverage start time of the second satellite on the ground. Alternatively, the first time parameter is first time information + preset duration. The second time parameter is the coverage end time of the second satellite corresponding to the second cell on the ground, or the second time parameter includes the first time parameter and duration in which the second satellite serves the second cell.

Certainly, when the first message includes the first indication information, the first message may also include one or more of the foregoing parameters. For example, the first message includes the first indication information and the first time parameter.

The third indication information indicates location information of the NTN parameter information, for example, information about a system information block in which the NTN parameter information is located.

In an example, the information about the measurement timing configuration is used to determine the measurement timing configuration. The measurement timing configuration indicates the terminal to search, based on the measurement timing configuration, for a downlink synchronization signal of the second cell in the second satellite. The measurement timing configuration includes a measurement window for receiving the downlink synchronization signal, and a periodicity (periodicity) and an offset (offset) of the measurement window.

Optionally, the measurement timing configuration is configured based on a downlink timing relationship of the first cell of the first satellite. Optionally, the measurement timing configuration is configured based on a downlink timing relationship of the second cell in the second satellite. The terminal calculates, according to the following formula, a 1st subframe number and a 1st system frame number that are used to search for the downlink synchronization signal of the second cell (that is, a 1st measurement window starts from a moment corresponding to the 1st subframe number and the 1st system frame number, duration is a length of the measurement window, and signal receiving is subsequently performed in the measurement window based on the periodicity (periodicity)).

$$\text{SFN mod } T = (\text{FLOOR}(\text{Offset}/10)).$$

If the periodicity (Periodicity) is greater than five subframes,

$$\text{subframe} = \text{Offset mod 10};$$

otherwise,

$$\text{subframe} = \text{Offset or (Offset + 5), where T = CEIL(Periodicity/10)}.$$

MOD is a mathematical operator, and indicates a modulo (also referred to as modulus) operator.

FLOOR is a mathematical operator, and is to round down a number to a nearest integer (rounding down).

CEIL is a mathematical operator, and is to round up a number to a nearest integer (rounding up).

In the foregoing solution, a process in which the terminal senses a change of the satellite of the first cell is described. After the first network device notifies the terminal that satellite alternation is to occur for the first cell, although the second cell and the first cell have the same cell identifier, the second cell and the first cell may have different coverage areas on the ground. Therefore, the terminal may be located within the coverage area of the second cell served by the second satellite on the ground, or the terminal may be located outside the coverage area of the second cell served by the second satellite on the ground. In different scenarios, subsequent actions performed by the terminal are generally different. Therefore, this embodiment of this application is described with reference to different scenarios.

Scenario (1): The terminal is located outside the coverage area of the second cell served by the second satellite on the ground.

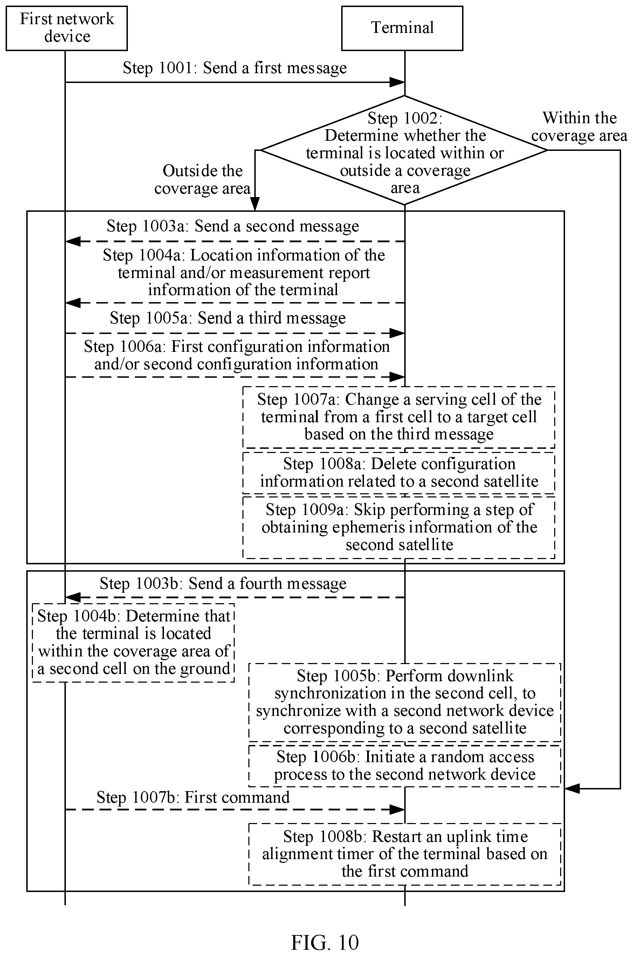

In the scenario (1), FIG. 10 shows a specific process of another communication method according to an embodiment of this application. Step 1001 and step 1002 in FIG. 10 are the same as step 901 and step 902. Details are not described herein again. Optionally, after step 1002, the method provided in this embodiment of this application may further include the following step:

Step 1003a: The terminal sends a second message to the first network device. Correspondingly, the first network device receives the second message from the terminal. The second message indicates that the terminal is located outside the coverage area of the second cell served by the second satellite on the ground.

It should be noted that step 1003a is an optional step. To be specific, when the terminal determines that the terminal is located outside the coverage area of the second cell on the ground, the terminal may omit a process of sending the second message to the first network device.

When the terminal determines that the terminal is located outside the coverage area of the second cell on the ground, the terminal sends the second message to the first network device, so that the first network device learns in time that the terminal is located outside the coverage area of the second cell on the ground, and triggers the terminal to perform cell handover in time, to ensure subsequent normal communication of the terminal. Especially, when the first network device sends the first message in a broadcast manner, there may be a plurality of terminals accessing the first cell, and some of the plurality of terminals may be located outside the coverage area of the second cell on the ground, and some of the plurality of terminals may be located within the coverage area of the second cell on the ground. Therefore, if the terminal feeds back the second message to the first network device, the first network device triggers the terminal to perform cell handover. However, for a terminal that does not feed back the second message or that feeds back that the terminal is located within the coverage area of the second cell on the ground, cell handover does not need to be triggered. Optionally, the second message may further include an identifier of the terminal, so that the first network device determines a terminal that is located outside the coverage area of the second cell on the ground.

Optionally, the second message may include second indication information, and the second indication information indicates that the terminal is located outside the coverage area of the second cell on the ground. Alternatively, the second message is the second indication information. This is not limited in embodiments of this application.

It may be understood that when the second message includes the second indication information, the first network device determines, based on the second indication information, that the terminal is located outside a coverage area of the second satellite on the ground. For example, the first network device parses the second message to obtain the second indication information.

Optionally, the second message may be a predefined message specially used to exchange, between the terminal and the first network device, a message indicating that the terminal is located outside the coverage area of the second satellite on the ground. In this way, after receiving the second message, the first network device may learn that the terminal is located outside the coverage area of the second satellite on the ground. For example, the first network device does not need to parse the second message. Optionally, the second message may alternatively be an existing message for communication between the terminal and the first network device.

It should be noted that, when the first network device does not indicate the terminal to report a determining result, a behavior of sending the second message by the terminal is a spontaneous behavior of the terminal. Certainly, if the first network device indicates the terminal to report the determining result, the terminal may send the second message to the first network device based on an indication of the first network device.

Certainly, whether the terminal reports the second message to the first network device, or whether the terminal reports the second message within the coverage area of the second cell on the ground, or reports the second message outside the coverage area of the second cell on the ground may be predefined in a protocol. This is not limited in embodiments of this application.

In a possible embodiment of this application, when the terminal obtains a first time parameter of the second satellite, the terminal may send the second message to the first network device before coverage start time of the second satellite. Sending time of the second message may be determined by the terminal, or may be indicated by the first network device to the terminal. This is not limited in embodiments of this application. For example, in a process in which the first network device notifies the terminal that satellite alternation occurs, the first network device notifies the terminal to report the determining result before the coverage start time of the second satellite, or notifies the terminal to report the determining result before coverage end time of the first satellite on the ground.

In a possible implementation of this application, when the terminal is located outside the coverage area of the second cell on the ground, optionally, as shown in FIG. 10, the method provided in this embodiment of this application may further include the following step:

Step 1004a: The terminal sends location information of the terminal and/or measurement report information of the terminal to the first network device. Correspondingly, the first network device receives the location information and/or the measurement report information of the terminal from the terminal.

It may be understood that the measurement report information is a network measurement result obtained by the terminal by performing measurement based on a measurement configuration configured by the first network device. The network measurement result includes parameter information such as signal strength and signal quality of a neighboring cell or a frequency of the terminal. The terminal provides the measurement report information for the first network device, so that the first network device configures second configuration information for the terminal based on the measurement report information, where the second configuration information includes a cell handover condition. Optionally, the first network device may further configure a target cell for the terminal based on the measurement report information.

In a possible implementation of this application, after step 1004a, the method provided in this embodiment of this application may further include: The first network device determines first configuration information and/or the second configuration information of the terminal by using the measurement report information of the terminal. The first configuration information is used by the terminal to determine the target cell. The second configuration information is used by the terminal to determine a condition for performing cell handover.

The terminal provides the location information of the terminal for the first network device, so that the first network device determines, based on the location information of the terminal and the coverage area of the second cell served by the second satellite on the ground, that the terminal is located within or outside the coverage area of the second cell on the ground.

In addition, the first network device may determine the first configuration information and/or the second configuration information of the terminal by using the location information of the terminal. In this way, the first configuration information and/or the second configuration information configured for the terminal are/is conducive to subsequent communication of the terminal, and it is ensured that subsequent communication of the terminal is not interrupted.

In a possible implementation of this application, the terminal may send the location information of the terminal and/or the measurement report information of the terminal to the first network device when triggered by the first network device. For example, after the terminal sends the second message to the first network device, to further determine that the terminal is located outside the coverage area of the second cell on the ground, or to configure the target cell to which the terminal can switch or configure the cell handover condition (for the terminal to determine to switch from the first cell to the target cell when a specific condition is met), the first network device may send a request instruction to the terminal, to request the terminal to provide the location information of the terminal and/or the measurement report information of the terminal. Alternatively, the first network device may obtain the location information of the terminal from another device (for example, an AMF network element). This is not limited in embodiments of this application.

In another possible implementation of this application, when the terminal is located outside the coverage area of the second cell served by the second satellite on the ground, the terminal may actively send the location information of the terminal and/or the measurement report information of the terminal to the first network device. Alternatively, it is stipulated in a protocol that when the terminal detects that the terminal is located outside a coverage area of a cell served by a satellite on the ground, the terminal needs to send the location information of the terminal and/or the measurement report information of the terminal to the first network device.

In an example, the location information and/or the measurement report information of the terminal are/is carried in the second message, and signaling overheads can be reduced by using the second message to carry the location information and/or the measurement report information of the terminal. Certainly, the location information and/or the measurement report information of the terminal may be carried in a message different from the second message. This is not limited in embodiments of this application.

In a possible implementation of this application, when it is determined that the terminal is located outside the coverage area of the second cell served by the second satellite on the ground, even if the first network device does not indicate the terminal to report the determining result, the terminal may determine to report the determining result to the first network device.

In a possible implementation of this application, that the first network device determines that the terminal is located outside the coverage area of the second cell served by the second satellite on the ground may be implemented in the following manner: The first network device determines, based on the second message, that the terminal is located outside the coverage area of the second cell served by the second satellite on the ground.

In another possible implementation of this application, the first network device determines, based on the location information of the terminal and the coverage area of the second cell served by the second satellite on the ground, that the terminal is located outside the coverage area of the second cell served by the second satellite on the ground.

Alternatively, when the first network device receives the second message, the first network device may further determine, with reference to the location information of the terminal, whether the terminal is located outside the coverage area of the second cell corresponding to the second satellite on the ground.

To ensure subsequent normal communication of the terminal, when determining that the terminal is located outside the coverage area of the second cell served by the second satellite on the ground, the first network device may further indicate the terminal to change a serving cell of the terminal.

It should be noted that a sequence of step 1003a and step 1004a is not limited in embodiments of this application. The terminal may first perform step 1004a and then perform step 1003a, or perform step 1003a and step 1004a at the same time. In other words, the second message includes the location information of the terminal and/or the measurement report information of the terminal.

In a possible embodiment of this application, as shown in FIG. 10, when the first network device determines that the terminal is located outside the coverage area of the second satellite on the ground, after step 1002, the method provided in this embodiment of this application may include the following step:

Step 1005a: The first network device sends a third message to the terminal. Correspondingly, the terminal receives the third message from the first network device. The third message indicates the terminal to change the serving cell of the terminal from the first cell to the target cell. That is, the third message indicates the terminal to perform cell handover. The target cell and the first cell have different cell identifiers.

In an example, the third message includes fourth indication information, and the fourth indication information indicates the terminal to change the serving cell of the terminal from the first cell to the target cell. The fourth indication information and the first configuration information may be same information, or certainly may be different information. This is not limited in embodiments of this application.

In another example, the third message includes information about the target cell. The target cell is a cell to which the terminal is to switch and that is selected by the first network device for the terminal, and the terminal is located within a range of the target cell. Optionally, the first network device may select a cell for the terminal as the target cell based on the location information of the terminal and/or the measurement report information of the terminal. For example, signal quality or signal strength of the target cell is higher than a preset value.

The target cell and the first cell may belong to a same network device, for example, the first network device. Certainly, the target cell and the first cell may alternatively belong to different network devices. For example, the first cell belongs to one of one or more cells covered by the first network device, and the target cell is one of one or more cells covered by a third network device.

In a possible implementation of this application, the target cell may alternatively be served by the second satellite, but the target cell is different from the second cell. For example, the coverage area of the second satellite on the ground includes a coverage area of the target cell on the ground and the coverage area of the second cell on the ground. Although the terminal may be located outside the coverage area of the second cell on the ground, the terminal may be located within the coverage area of the target cell on the ground. Therefore, the terminal may switch to the target cell, so that the terminal continues to perform communication via the second satellite, to avoid communication interruption. Certainly, the target cell may alternatively be a cell covered by a third satellite on the ground. This is not limited in embodiments of this application.

In a possible embodiment of this application, when the first network device determines that the terminal is located within the coverage area of the second cell served by the second satellite on the ground, as shown in FIG. 10, the method provided in this embodiment of this application may further include the following steps.

Step 1006a: The first network device sends the first configuration information and/or the second configuration information to the terminal. Correspondingly, the terminal receives the first configuration information and/or the second configuration information from the first network device.

Optionally, when the third message includes the first configuration information and/or the second configuration information, step 1006a may be omitted.

Certainly, the first configuration information and/or the second configuration information may alternatively be sent to the terminal by using a fourth message, and the fourth message is different from the third message.

In a possible embodiment of this application, after sending the third message to the terminal, the first network device may actively provide the first configuration information and/or the second configuration information for the terminal. Alternatively, if receiving a request from the terminal, the first network device may send the first configuration information and/or the second configuration information to the terminal.

In an example, the second configuration information includes a configuration of a CHO candidate cell and a CHO execution condition. The CHO execution condition may be any one or more of a time-based CHO trigger condition, a location-based trigger condition, an event (Event A3), an event A4, or an event A5. For example, the CHO execution condition includes the time-based CHO trigger condition and any one or more of the following events: the event (Event A3), the event A4, or the event A5. The CHO execution condition includes the location-based trigger condition and any one or more of the following events: the event (Event A3), the event A4, or the event A5.

It should be noted that a sequence of step 1005a and step 1006a is not limited in embodiments of this application. The first network device may first perform step 1005a and then perform step 1006a, or may first perform step 1006a and then perform step 1005a. Certainly, step 1005a and step 1006a may alternatively be performed at the same time. In addition, when the first network device determines, from the terminal, that the terminal is located outside the coverage area of the second cell on the ground, step 1005a or step 1006a is performed after step 1003a or step 1004a.

Step 1007a: The terminal changes the serving cell of the terminal from the first cell to the target cell based on the third message.

In a possible implementation of this application, when the terminal obtains the first configuration information and/or the second configuration information, step 1007a may be implemented in the following manner: The terminal determines the information about the target cell based on the first configuration information. The terminal switches from the first cell to the target cell based on the information about the target cell.

In a possible implementation of this application, after receiving the third message, the terminal may evaluate a handover condition, and when the cell handover condition indicated by the second configuration information is met, the terminal changes the serving cell from the first cell to the target cell. In this way, a handover failure caused by blind handover of the terminal is avoided.

In a possible embodiment of this application, optionally, as shown in FIG. 10, after step 1002, the method provided in this embodiment of this application may include one or both of step 1008a and step 1009a.

Step 1008a: The terminal deletes configuration information related to the second satellite, for example, NTN parameter information of the second satellite, or the coverage start time or the coverage end time of the second satellite, for example, ephemeris information of the second satellite, timing advance (timing advance, TA) parameter information of the second satellite, measurement configuration information related to the second cell, and handover and/or conditional handover configuration information related to the second cell.

It should be noted that when the terminal is located outside the coverage area of the second cell on the ground, if the terminal has the configuration information related to the second satellite, the terminal may perform step 1008a; or if the terminal does not have the configuration information related to the second satellite, step 1008a may be omitted.

Optionally, after step 1008a, the terminal may send a feedback response to the first network device, to indicate that the configuration information related to the second satellite has been deleted.

In this embodiment of this application, when the terminal is located outside the coverage area of the second cell on the ground, the terminal deletes the configuration information related to the second satellite, to reduce occupation of a memory of the terminal.

Certainly, when the first network device determines that the terminal is located outside the coverage area of the second satellite on the ground, the first network device may indicate the terminal to delete the configuration information related to the second satellite. For example, when triggering the terminal to perform cell handover, the first network device may send sixth indication information to the terminal, to indicate the terminal to delete the configuration information related to the second satellite. Certainly, the terminal may alternatively actively delete the configuration information related to the second satellite when the terminal is located outside the coverage area of the second cell on the ground.

Optionally, when the target cell is a cell covered by the second satellite on the ground, the terminal may not perform step 1008a, but perform the step of obtaining the ephemeris information of the second satellite.

Step 1009a: The terminal skips performing the step of obtaining the ephemeris information of the second satellite.

It should be noted that a sequence of performing step 1008a and step 1009a by the terminal is not limited in this application. For example, the terminal may first perform step 1009a and then perform step 1008a.

Scenario (2): The terminal is located within the coverage area of the second cell served by the second satellite on the ground.

In the scenario (2), as shown in FIG. 10, optionally, after step 1002, the method provided in this embodiment of this application may further include one or more of a notification phase, a synchronization phase, and a random access phase. The notification phase includes step 1003b and step 1004b. An objective of the notification phase is to enable the first network device to determine that the terminal is located within the coverage area of the second cell on the ground, that is, the terminal may subsequently perform communication via the second satellite.

Step 1003b: The terminal sends a fourth message to the first network device. Correspondingly, the first network device receives the fourth message from the terminal. The fourth message indicates that the terminal is located within the coverage area of the second cell on the ground.

Optionally, the fourth message may include fourth indication information, and the fourth indication information indicates that the terminal is located within the coverage area of the second cell on the ground.

Optionally, the fourth message may be a predefined message specially used to exchange, between the terminal and the network device, a message indicating that the terminal is located within the coverage area of the second cell served by the second satellite on the ground. In this way, after receiving the fourth message, the first network device may determine that the terminal is located within the coverage area of the second cell served by the second satellite on the ground.

When the terminal is located within the coverage area of the second cell on the ground, the terminal may also send location information of the terminal and/or measurement report information of the terminal to the first network device. For a specific process and implementation, refer to a process in which the terminal sends the location information of the terminal and/or the measurement report information of the terminal to the first network device when the terminal is located outside the coverage area of the second cell on the ground.

Step 1004b: The first network device determines that the terminal is located within the coverage area of the second cell on the ground.

In a possible implementation of this application, step 1003b may be omitted. To be specific, when the terminal determines that the terminal is located within the coverage area of the second cell on the ground, the terminal may not need to feed back the fourth message to the first network device.

In a possible implementation of this application, when the first network device receives the fourth message, step 1004b may be implemented in the following manner: The first network device determines, based on the fourth message, that the terminal is located within the coverage area of the second cell served by the second satellite on the ground.

Optionally, when the fourth message includes the fourth indication information, step 1004b may be implemented in the following manner: The first network device determines, based on the fourth indication information, that the terminal is located within the coverage area of the second cell served by the second satellite on the ground.

In a possible implementation of this application, when the first network device obtains the location information of the terminal, step 1004b may be implemented in the following manner: The first network device may determine, based on the location information of the terminal and the coverage area of the second cell on the ground, that the terminal is located within the coverage area of the second cell on the ground.

Optionally, when the terminal notifies, by using the fourth message, the first network device that the terminal is located within the coverage area of the second cell on the ground, the first network device may further determine, based on the location information of the terminal and the coverage area of the second cell on the ground, that the terminal is actually located within the coverage area of the second cell on the ground.

Optionally, when the first network device determines that the terminal is located within the coverage area of the second cell on the ground, the first network device may further send NTN parameter information of the second satellite to the terminal. The NTN parameter information includes parameter information needed for the terminal to access an NTN (or the second cell) corresponding to the second satellite. If the terminal accesses the NTN via the second satellite, the NTN parameter information is parameter information such as a satellite ephemeris, effective time of an ephemeris, and a common timing advance parameter.

Optionally, when the first network device determines that the terminal is located within the coverage area of the second cell on the ground, the first network device may further send indication information of the NTN parameter information of the second satellite to the terminal. The indication information indicates location information of an NTN parameter, for example, information about a system information block in which the NTN parameter information of the second satellite is located.

It should be noted that when the terminal is located within the coverage area of the second cell on the ground, the first network device sends the NTN parameter information of the second satellite and/or the indication information of the NTN parameter information of the second satellite to the terminal. In this way, it can be ensured that the sent information is information available for the terminal.

Optionally, the NTN parameter information of the second satellite and/or the indication information of the NTN parameter information of the second satellite may alternatively be provided by the first network device for the terminal in a process of notifying the terminal that satellite alternation occurs, for example, carried in the first message.

An objective of the synchronization phase is to enable the terminal to synchronize with a second network device corresponding to the second satellite, to receive downlink transmission, for example, a broadcast message, from the second network device. In an example, the synchronization phase includes step 1005b.

Step 1005b: The terminal performs downlink synchronization in the second cell, to synchronize with the second network device corresponding to the second satellite.

In an example, the second network device and the first network device may be a same network device.

Alternatively, the second network device and the first network device are different network devices. This is not limited in embodiments of this application.

In a possible implementation of this application, the terminal synchronizes with the second network device before coverage end time of the first satellite on the ground and/or after coverage start time of the second satellite on the ground.

In an example, step 1005b may be implemented in the following manner: The terminal searches the first cell for a downlink synchronization signal of the second cell, to perform downlink synchronization (for example, searches for the synchronization signal of the second cell, and obtains downlink timing, that is, obtains boundaries of a system frame, a subframe, a slot, and a symbol of the second cell in the second satellite). Alternatively, the terminal updates downlink synchronization of the terminal in the second cell based on a location of the second satellite, a location of the first satellite, and current location information of the terminal, that is, updates downlink synchronization of the second cell currently achieved by the first terminal.

In a possible embodiment of this application, as shown in FIG. 10, when the terminal synchronizes with the second network device, the method provided in this embodiment of this application may further include the following step:

Step 1006b: The terminal initiates a random access process to the second network device.

An example is used for description. When the terminal synchronizes with the second network device, the terminal may immediately initiate the random access process to the second network device. Certainly, the terminal may alternatively initiate the random access process when the first condition is met. The terminal initiates the random access process, so that the terminal sends uplink transmission to the second network device.

In an example, the first condition includes any one of the following:

before the coverage end time of the first satellite;
after the coverage start time of the second satellite;
data transmission is needed (where for example, downlink data is received from the second network device, and/or uplink data is sent to the second network device); or
an uplink time alignment timer of the terminal does not expire.

It may be understood that, if the uplink time alignment timer of the terminal does not expire, it indicates that there is to-be-transmitted uplink data between the terminal and the first network device corresponding to the first satellite, and transmission of the uplink data does not end.

In a possible implementation of this application, when a second condition is met, after the terminal synchronizes with the second network device, the terminal does not need to initiate the random access process to the second network device. In an example, the second condition includes at least that an uplink time alignment timer of the terminal expires, or the terminal needs no uplink data transmission, or the uplink time alignment timer of the terminal is not started.

Optionally, when the uplink time alignment timer of the terminal expires, if the terminal does not initiate the random access process to the second network device, when uplink data transmission is needed subsequently, the terminal may also initiate the random access process.

For a specific implementation in which the terminal initiates the random access process to the second network device, refer to descriptions in the conventional technology. This is not limited in embodiments of this application.

In an optional embodiment of this application, when the terminal accesses the second network device through the random access process, as shown in FIG. 10, the method provided in this embodiment of this application may further include the following steps:

Step 1007b: The second network device sends a first command (for example, an uplink time alignment command) to the terminal. Correspondingly, the terminal receives the first command (for example, the uplink time alignment command) from the second network device.
Step 1008b: The terminal restarts the uplink time alignment timer of the terminal based on the first command.

In a possible implementation of this application, when the terminal is located within the coverage area of the second satellite on the ground, the method provided in this embodiment of this application may further include: The terminal re-obtains NTN parameter information of the second satellite before the NTN parameter information corresponding to the second satellite becomes invalid.

Optionally, the terminal should obtain the NTN parameter information of the second satellite before the first satellite leaves (that is, before the coverage end time of the first satellite). In other words, the terminal should ensure that the NTN parameter information of the second satellite is valid when the first satellite leaves.

Optionally, the terminal may obtain the NTN parameter information of the second satellite via the first satellite.

Optionally, the terminal may obtain the NTN parameter information of the second satellite via the second satellite.

Optionally, when the terminal is located within the coverage area of the second cell on the ground, the terminal may skip evaluating another CHO condition. Optionally, the terminal may skip measuring a candidate target cell corresponding to the CHO. Optionally, the terminal may release another CHO configuration. Optionally, the terminal may further send indication information to the first network device, to indicate the terminal to skip evaluating, skip measuring, or release a CHO configuration. Optionally, the indication information for skipping evaluating, skipping measuring, or releasing the CHO configuration may be carried in the fourth message. In an example, the CHO configuration may be released by using CHO identification information. For example, the terminal reports an identifier corresponding to the CHO configuration that needs to be released.

The foregoing mainly describes the solutions in embodiments of this application from a perspective of interaction between network elements. It may be understood that to implement the foregoing functions, each network element, for example, the first network device or the terminal, includes a corresponding structure and/or software module for performing each function. A person skilled in the art should easily be aware that, in combination with units and algorithm steps of the examples described in embodiments disclosed in the specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first network device and the terminal may be divided into function units based on the foregoing method examples. For example, each function unit may be obtained through division based on each corresponding function, or two or more functions may be integrated into one processing unit. The integrated unit may be implemented in a form of hardware, or may be implemented in a form of a software function unit. It should be noted that, in embodiments of this application, division into the units is an example, and is merely a logical function division. In an actual implementation, another division manner may be used.

The foregoing describes the method in embodiments of this application with reference to FIG. 9 and FIG. 10. The following describes a communication apparatus that is provided in embodiments of this application and that performs the foregoing method. A person skilled in the art may understand that the method and the apparatus may be mutually combined and referenced. The communication apparatus provided in embodiments of this application may perform the steps performed by the terminal and the first network device in the foregoing communication method.

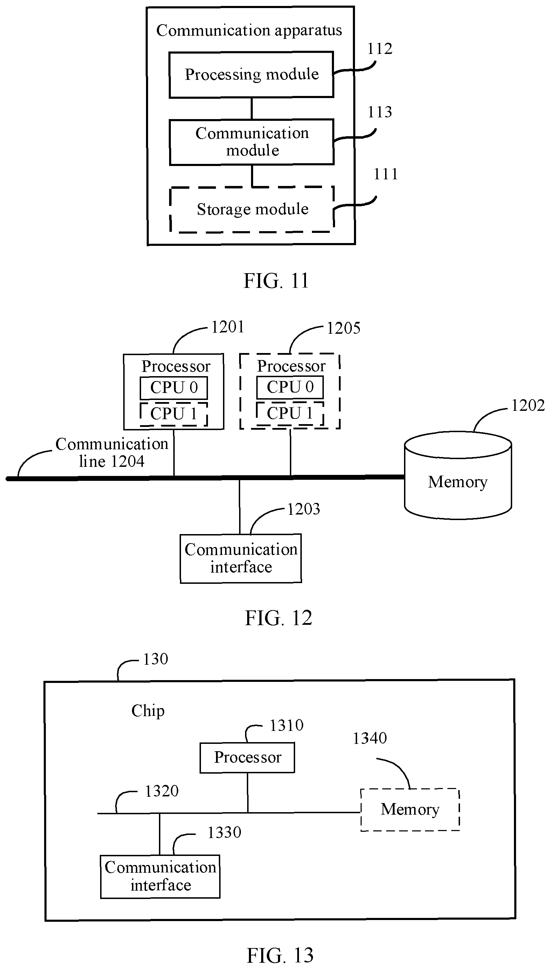

When an integrated unit is used, FIG. 11 shows a communication apparatus in the foregoing embodiment. The communication apparatus may include a communication module 113 and a processing module 112.

In an optional implementation, the communication apparatus may further include a storage module 111, configured to store program code and data of the communication apparatus.

In an example, the communication apparatus is a terminal, or a chip used in the terminal. In this case, the communication module 113 is configured to support the communication apparatus in communicating with an external network element (for example, a first network device). For example, the communication module 113 is configured to perform a signal receiving and sending operation performed by the terminal in the foregoing method embodiment. The processing module 112 is configured to perform a signal processing operation performed by the terminal in the foregoing method embodiment.

An example is used for description. The communication module 113 is configured to perform a receiving action performed by the terminal in step 901 in FIG. 9 or step 1001 in FIG. 10 in the foregoing embodiment. The processing module 112 is configured to support the communication apparatus in performing an action performed by the terminal in step 902 in FIG. 9 or step 1002 in FIG. 10.

When the terminal is located outside a coverage area of a second cell on the ground, optionally, the communication module 113 is further configured to perform a sending action performed by the terminal in step 1003a in FIG. 10 in the foregoing embodiment. Optionally, the communication module 113 is further configured to perform a sending action performed by the terminal in step 1004a in FIG. 10 in the foregoing embodiment. Optionally, the communication module 113 is further configured to perform a receiving action performed by the terminal in step 1005a and/or step 1006a in FIG. 10 in the foregoing embodiment. Optionally, the processing module 112 is further configured to perform step 1007a in FIG. 10 in the foregoing embodiment. Optionally, the processing module 112 is further configured to perform step 1008a and/or step 1009a in FIG. 10 in the foregoing embodiment.

When the terminal is located within a coverage area of a second cell on the ground, optionally, the communication module 113 is further configured to perform a sending action performed by the terminal in step 1003b and/or step 1004b in FIG. 10 in the foregoing embodiment. Optionally, the processing module 112 is further configured to perform step 1005b and step 1006b. Optionally, the communication module 113 is further configured to perform a receiving action performed by the terminal in step 1007b in FIG. 10 in the foregoing embodiment. The processing module 112 is further configured to perform step 1008b.

In another example, the communication apparatus is a first network device, or a chip used in the first network device. In this case, the communication module 113 is configured to support the communication apparatus in communicating with an external network element (for example, a terminal). For example, the communication module 113 is configured to perform a signal receiving and sending operation performed by the first network device in the foregoing method embodiment. The processing module 112 is configured to perform a signal processing operation performed by the first network device in the foregoing method embodiment.

An example is used for description. The communication module 113 is configured to perform a sending action performed by the first network device in step 901 in FIG. 9 or step 1001 in FIG. 10 in the foregoing embodiment.

Optionally, the communication module 113 is configured to perform a receiving action performed by the first network device in step 1003a or step 1003b in FIG. 10 in the foregoing embodiment.

Optionally, the communication module 113 is configured to perform a receiving action performed by the first network device in step 1004a or step 1004b in FIG. 10 in the foregoing embodiment.

Optionally, when the terminal is located outside a coverage area of a second cell on the ground, the communication module 113 is configured to perform a sending action performed by the first network device in step 1005a in FIG. 10 in the foregoing embodiment.

Optionally, when the terminal is located outside a coverage area of a second cell on the ground, the communication module 113 is configured to perform a sending action performed by the first network device in step 1006a in FIG. 10 in the foregoing embodiment.

It should be noted that, in FIG. 11, the communication module 113 may alternatively be replaced with a communication unit, the processing module 112 may alternatively be replaced with a processing unit, and the storage module 111 may alternatively be replaced with a storage unit. The processing unit is configured to control and manage actions of the communication apparatus. For example, the processing unit is configured to perform an information/data processing step performed by the communication apparatus. The communication unit is configured to support the communication apparatus in performing an information/data sending or receiving step.

In a possible implementation, the communication unit may include a receiving unit and a sending unit. The receiving unit is configured to receive a signal, and the sending unit is configured to send a signal.

The processing module 112 may be a processor or a controller, for example, may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

When the processing module 112 is a processor 1201 or a processor 1205, the communication module 113 is a communication interface 1203, and the storage module 111 is a memory 1202, the communication apparatus in this application may be a communication device shown in FIG. 12.

FIG. 12 is a diagram of a hardware structure of the communication device according to an embodiment of this application. For structures of the terminal and the first network device in embodiments of this application, refer to the diagram of the structure of the communication device shown in FIG. 12. The communication device includes the processor 1201, a communication line 1204, and at least one communication interface (where the communication interface 1203 is used as an example in FIG. 12 for description).

The processor 1201 may be a general-purpose central processing unit (central processing unit, CPU), a microprocessor, an application-specific integrated circuit (application-specific integrated circuit, ASIC), or one or more integrated circuits for controlling program execution of the solutions in this application.

The communication line 1204 may include a path for transmitting information between the foregoing components.

The communication interface 1203 is configured to exchange information with another apparatus by using, for example, any type of apparatus such as a transceiver, and is configured to communicate with another device or a communication network, for example, an Ethernet, a radio access network (radio access network, RAN), or a wireless local area network (wireless local area network, WLAN).

Optionally, the communication device may further include a memory 1202.

The memory 1202 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer, but is not limited thereto. The memory may exist independently and is connected to the processor through the communication line 1204. The memory may alternatively be integrated with the processor.

The memory 1202 is configured to store computer-executable instructions for executing the solutions in this application, and the processor 1201 controls execution of the computer-executable instructions. The processor 1201 is configured to execute the computer-executable instructions stored in the memory 1202, to implement the communication method provided in the foregoing embodiments of this application.

Optionally, the computer-executable instructions in this embodiment of this application may also be referred to as application program code. This is not specifically limited in embodiments of this application.

In a specific implementation, in an embodiment, the processor 1201 may include one or more CPUs such as a CPU 0 and a CPU 1 in FIG. 12.

In a specific implementation, in an embodiment, the communication device may include a plurality of processors, for example, the processor 1201 and a processor 1205 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

FIG. 13 is a diagram of a structure of a chip 130 according to an embodiment of this application. The chip 130 includes one or more than two (including two) processors 1310 and a communication interface 1330.

Optionally, the chip 130 further includes a memory 1340. The memory 1340 may include a read-only memory and a random access memory, and provide operation instructions and data for the processor 1310. A part of the memory 1340 may further include a non-volatile random access memory (non-volatile random access memory, NVRAM).

In some implementations, the memory 1340 stores the following elements: an executable module or a data structure, a subset thereof, or an extended set thereof.

In this embodiment of this application, a corresponding operation is performed by invoking the operation instructions (where the operation instructions may be stored in an operating system) stored in the memory 1340.

In a possible implementation, structures of chips used by the terminal and the first network device are similar, and different apparatuses may use different chips to implement respective functions.

The processor 1310 controls a processing operation of either of the terminal and the first network device. The processor 1310 may also be referred to as a central processing unit (central processing unit, CPU).

The memory 1340 may include a read-only memory and a random access memory, and provides instructions and data for the processor 1310. A part of the memory 1340 may further include an NVRAM. For example, during application, the memory 1340, the communication interface 1330, and the memory 1340 are coupled together by using a bus system 1320. In addition to a data bus, the bus system 1320 may include a power bus, a control bus, a status signal bus, and the like. However, for clear description, various types of buses in FIG. 13 are marked as the bus system 1320.

The method disclosed in embodiments of this application may be applied to the processor 1310, or implemented by the processor 1310. The processor 1310 may be an integrated circuit chip and has a signal processing capability. In the implementation process, each step of the foregoing method may be completed by using an integrated logical circuit of hardware in the processor 1310 or instructions in a form of software. The processor 1310 may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1340. The processor 1310 reads information in the memory 1340, and completes the steps of the foregoing method in combination with hardware of the processor 1310.

In a possible implementation, the communication interface 1330 is configured to perform receiving and sending steps of the terminal and the first network device in the embodiments shown in FIG. 9 and FIG. 10. The processor 1310 is configured to perform processing steps of the terminal and the first network device in the embodiments shown in FIG. 6 to FIG. 10.

The communication module may be a communication interface of the apparatus, and is configured to receive a signal from another apparatus. For example, when the apparatus is implemented as a chip, the communication module is a communication interface used by the chip to receive a signal from or send a signal to another chip or apparatus.

According to an aspect, a computer-readable storage medium is provided. The computer-readable storage medium stores instructions, and when the instructions are run, a function performed by the terminal in FIG. 9 or FIG. 10 is implemented.

According to an aspect, a computer-readable storage medium is provided. The computer-readable storage medium stores instructions, and when the instructions are run, a function performed by the first network device in FIG. 9 or FIG. 10 is implemented.

According to an aspect, a computer program product including instructions is provided. The computer program product includes the instructions, and when the instructions are run, a function performed by the terminal in FIG. 6 is implemented.

According to another aspect, a computer program product including instructions is provided. The computer program product includes the instructions. When the instructions are run, a function performed by the first network device in FIG. 9 or FIG. 10 is implemented.

According to an aspect, a chip is provided. The chip is used in a terminal, and the chip includes at least one processor and a communication interface. The communication interface is coupled to the at least one processor. The processor is configured to run instructions, to implement a function performed by the terminal in FIG. 9 or FIG. 10.

According to another aspect, an embodiment of this application provides a chip. The chip is used in an access management network element. The chip includes at least one processor and a communication interface. The communication interface is coupled to the at least one processor. The processor is configured to run instructions, to implement a function performed by the first network device in FIG. 9 or FIG. 10.

An embodiment of this application provides a communication system. The communication system includes a first network device and a terminal. The first network device is configured to perform a function performed by the first network device in FIG. 9 or FIG. 10, and the terminal is configured to perform a function performed by the terminal in FIG. 9 or FIG. 10.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

Although this application is described with reference to embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to this application without departing from the spirit and scope of this application. Correspondingly, the specification and the accompanying drawings are merely example descriptions of this application defined by the appended claims, and are considered to cover any of or all modifications, variations, combinations, or equivalents within the scope of this application. It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A communication method, comprising:

   receiving, by a terminal, a first message from a first network device, wherein the first message indicates that a satellite that provides a service for a first cell is updated from a first satellite to a second satellite, the first cell is a cell accessed by the terminal, the first network device corresponds to the first satellite, the first message comprises first information, the first information is used to determine a coverage area of a second cell served by the second satellite on the ground, and the first cell and the second cell have a same cell identifier; and
   determining, by the terminal based on the first message, a location of the terminal, and the coverage area of the second cell on the ground, whether the terminal is located within the coverage area or outside the coverage area.

2.  The method according to claim 1, wherein after the determining, by the terminal based on a location of the terminal and the coverage area of the second cell on the ground, whether the terminal is located within the coverage area or outside the coverage area, the method further comprises:
    sending, by the terminal, a second message to the first network device, wherein the second message indicates that the terminal is located within the coverage area of the second cell on the ground, or the second message indicates that the terminal is located outside the coverage area of the second cell on the ground.

3.  The method according to claim 1 or 2, wherein after the determining, by the terminal based on a location of the terminal and the coverage area of the second cell on the ground, whether the terminal is located within the coverage area or outside the coverage area, the method further comprises:
    sending, by the terminal, location information of the terminal and/or measurement report information of the terminal to the first network device, wherein the measurement report information comprises information indicating signal quality of a neighboring cell of the terminal.

4.  The method according to any one of claims 1 to 3, wherein if the terminal is located within the coverage area of the second cell served by the second satellite on the ground, the method further comprises:
    performing, by the terminal, downlink synchronization in the second cell, to synchronize with a second network device corresponding to the second cell, wherein the second network device corresponds to the second satellite.

5.  The method according to claim 4, wherein when a first condition is met, the method further comprises:
    initiating, by the terminal, a random access process to the second network device, wherein the first condition comprises any one or more of the following:

    before coverage end time of the first satellite on the ground;
    after coverage start time of the second satellite on the ground;
    data transmission is needed; or
    an uplink time alignment timer of the terminal does not expire.

6.  The method according to claim 4, wherein when a second condition is met, the terminal does not need to initiate a random access process to the second network device, wherein the second condition comprises at least that an uplink time alignment timer of the terminal expires or an uplink time alignment timer of the terminal is not started.

7.  The method according to any one of claims 1 to 3, wherein if the terminal is located outside the coverage area of the second cell served by the second satellite on the ground, the method further comprises:

    receiving, by the terminal, a third message from the first network device, wherein the third message indicates the terminal to switch to a target cell, the target cell and the first cell have different cell identifiers, and the terminal is located within a coverage area of the target cell; and
    changing, by the terminal, a serving cell of the terminal from the first cell to the target cell based on the third message.

8.  The method according to claim 7, wherein the third message comprises first configuration information, and the first configuration information is used by the terminal to determine information about the target cell; and
    the changing, by the terminal, a serving cell of the terminal from the first cell to the target cell based on the third message comprises:

    determining, by the terminal, the information about the target cell based on the first configuration information; and
    changing, by the terminal, the serving cell of the terminal from the first cell to the target cell based on the information about the target cell.

9.  The method according to claim 7 or 8, wherein the third message comprises second configuration information, and the second configuration information comprises a cell handover condition configured for the terminal; and
    the changing, by the terminal, a serving cell of the terminal from the first cell to the target cell based on the third message comprises:
    when the cell handover condition comprised in the second configuration information is met, changing, by the terminal, the serving cell of the terminal from the first cell to the target cell.

10. The method according to any one of claims 1 to 9, wherein the first message comprises a first time parameter and/or a second time parameter; the first time parameter is used to determine coverage start time of the second satellite corresponding to the second cell on the ground; and the second time parameter is used to determine coverage end time of the second satellite corresponding to the second cell on the ground; and

the method further comprises:

based on the first time parameter and/or the second time parameter, synchronizing, by the terminal, with the second network device corresponding to the second satellite after the coverage start time of the second satellite on the ground, or sending the second message to the first network device before the coverage start time of the second satellite on the ground.

11. The method according to any one of claims 1 to 10, wherein the first message further comprises one or more of the following information:

time information for performing, by the terminal, downlink synchronization in the second cell;

NTN parameter information of the second satellite, wherein the NTN parameter information comprises parameter information needed for the terminal to access an NTN corresponding to the second satellite;

third indication information, wherein the third indication information indicates location information of NTN parameter information; or

information about a measurement timing configuration, indicating the terminal to search, based on the measurement timing configuration, for a downlink synchronization signal of the second cell in the second satellite.

12. A communication method, comprising:

sending, by a first network device corresponding to a first satellite, a first message, wherein the first message indicates that a satellite that provides a service for a first cell is updated from the first satellite to a second satellite, the first message comprises first information, the first information is used to determine a coverage area of a second cell served by the second satellite on the ground, and the first cell and the second cell have a same cell identifier.

13. The method according to claim 12, wherein the first message comprises a first time parameter and/or a second time parameter;

the first time parameter is used to determine coverage start time of the second satellite corresponding to the second cell on the ground; and

the second time parameter is used to determine coverage end time of the second satellite corresponding to the second cell on the ground.

14. The method according to claim 12 or 13, wherein the first message further comprises one or more of the following information:

time information for performing, by a terminal, downlink synchronization in the second cell through the second satellite;

NTN parameter information of the second satellite, wherein the NTN parameter information comprises parameter information needed for a terminal to access the second cell;

third indication information, wherein the third indication information indicates location information of NTN parameter information; or

information about a measurement timing configuration, indicating a terminal to search, based on the measurement timing configuration, for a downlink synchronization signal of the second cell in the second satellite.

15. The method according to claim 14, wherein the first message comprises the information about the measurement timing configuration, and the measurement timing configuration is configured based on a downlink timing relationship of the first cell in the first satellite, or the measurement timing configuration is configured based on a downlink timing relationship of the second cell in the second satellite, and the downlink timing relationship is used to determine a $1^{st}$ subframe number and a $1^{st}$ system frame number of the downlink synchronization signal of the second cell.

16. The method according to any one of claims 12 to 15, wherein when the first network device determines that a first terminal that accesses the first cell is located outside the coverage area of the second cell on the ground, the method further comprises:

sending, by the first network device, a third message to the accessing first terminal, wherein the third message indicates the first terminal to switch to a target cell, the target cell and the first cell have different cell identifiers, and the first terminal is located within a coverage area of the target cell.

17. The method according to claim 16, wherein the method further comprises:
sending, by the first network device, first configuration information and/or second configuration information to the first terminal, wherein the first configuration information is used by the first terminal to determine information about the target cell, and the second configuration information is used by the first terminal to determine a cell handover condition.

18. The method according to claim 17, wherein one or both of the first configuration information and the second configuration information are determined based on location information of the first terminal and/or measurement report information of the first terminal, and the measurement report information comprises information indicating signal quality of a neighboring cell of the first terminal.

19. The method according to any one of claims 12 to 18, wherein the method further comprises:

   receiving, by the first network device, a second message from the first terminal, wherein the first terminal is a terminal that accesses the first cell; and
   determining, by the first network device based on the second message, that the first terminal is located outside the coverage area of the second cell on the ground, or the first terminal is located within the coverage area of the second cell on the ground.

20. The method according to claim 19, wherein the second message comprises the location information of the first terminal, and the determining, by the first network device based on the second message, that the first terminal is located outside the coverage area of the second cell on the ground, or the first terminal is located within the coverage area of the second cell on the ground comprises:
determining, by the first network device based on the location information of the first terminal and the coverage area of the second cell on the ground, that the first terminal is located outside the coverage area of the second cell on the ground, or the first terminal is located within the coverage area of the second cell on the ground.

21. A computer-readable storage medium, wherein the computer-readable storage medium stores instructions, and when the instructions are executed, the method according to any one of claims 1 to 11 or the method according to any one of claims 12 to 20 is implemented.

22. A chip, wherein the chip comprises a processor, the processor is coupled to a communication interface, the processor is configured to run a computer program or instructions to implement the method according to any one of claims 1 to 11 or the method according to any one of claims 12 to 20, and the communication interface is configured to communicate with a module other than the chip.

23. A terminal, comprising at least one processor, wherein the at least one processor is connected to a communication interface, the communication interface is configured to receive or send information, and the at least one processor is configured to run instructions stored in a memory, to perform the method according to any one of claims 1 to 11.

24. A network device, comprising at least one processor, wherein the at least one processor is connected to a communication interface, the communication interface is configured to receive or send information, and the at least one processor is configured to run instructions stored in a memory, to perform the method according to any one of claims 12 to 20.

25. A communication system, comprising a terminal and a first network device corresponding to a first satellite, wherein the first network device is configured to perform the method according to any one of claims 12 to 20, and the terminal is configured to implement the method according to any one of claims 1 to 11.

Time T    Satellite 1    Satellite movement direction    Satellite 1    Time T+T1

Cell 1    Cell 2

Geographical location 1    Geographical location 2

(a)

Time T    Satellite 1    Satellite movement direction    Satellite 1    Time T+T1

Cell 1    Cell 1

Geographical location 1    Geographical location 2

(b)

FIG. 1

FIG. 2

FIG. 3

(a) T1 — Satellite 200, Cell 300, 100, Terminal 1, Terminal 2 ... Terminal n

(b) T2 — Satellite 400, Satellite 200, Cell 500, Cell 300, 100, Terminal 1, 600, Terminal 2 ... Terminal n

(c) T3 — Satellite 2, Cell 500, 600, Terminal 1, Terminal 2 ... Terminal n

CU

CU-CP

RRC

PDCP-C

E1

CU-UP

SDAP

PDCP-U

F1-C

F1-U

RLC

MAC

PHY

DU

FIG. 4

NG-RAN

NR Uu

Terminal

Non-terrestrial
network gateway

RRU

gNB

NG

5GC

N6

DN

FIG. 5

NG-RAN

gNB

Terminal

NR Uu

NG

NG over SRI

Non-terrestrial
network gateway

NG

5GC

N6

DN

FIG. 6

gNB

NR Uu

Terminal

NG

NG over SRI

Non-terrestrial
network gateway

Xn (over ISL)

gNB

NR Uu

Terminal

NG

NG over SRI

Non-terrestrial
network gateway

5GC

N6

DN

5GC

N6

DN

FIG. 7

EP 4 539 355 A1

NG-RAN

FIG. 8

Step 901: Send a first message

Step 902: The terminal determines, based on the first message, location information of the terminal, and a coverage area of a second cell served by a second satellite on the ground, whether the terminal is located within the coverage area of the second cell on the ground or outside the coverage area of the second cell on the ground

FIG. 9

First network device

Terminal

Step 1001: Send a first message

Step 1002:
Determine whether the
terminal is located within or
outside a coverage
area

Within the
coverage area

Outside the
coverage area

Step 1003a: Send a second message

Step 1004a: Location information of the
terminal and/or measurement report
information of the terminal

Step 1005a: Send a third message

Step 1006a: First configuration information
and/or second configuration information

Step 1007a: Change a serving cell of the
terminal from a first cell to a target cell
based on the third message

Step 1008a: Delete configuration
information related to a second satellite

Step 1009a: Skip performing a step of
obtaining ephemeris information of the
second satellite

Step 1003b: Send a fourth message

Step 1004b: Determine that
the terminal is located
within the coverage area of
a second cell on the ground

Step 1005b: Perform downlink
synchronization in the second cell, to
synchronize with a second network device
corresponding to a second satellite

Step 1006b: Initiate a random access
process to the second network device

Step 1007b: First command

Step 1008b: Restart an uplink time
alignment timer of the terminal based on
the first command

FIG. 10

Communication apparatus

Processing module — 112

Communication module — 113

Storage module — 111

FIG. 11

— 1201   — 1205

Processor
CPU 0
CPU 1

Processor
CPU 0
CPU 1

— 1202

Communication line 1204

Memory

— 1203

Communication interface

FIG. 12

— 130

Chip

Processor — 1310

1340

— 1320

Memory

— 1330

Communication interface

FIG. 13

## INTERNATIONAL SEARCH REPORT

International application No.

**PCT/CN2023/105245**

### A. CLASSIFICATION OF SUBJECT MATTER

H04B 7/185(2006.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

3GPP, CNTXT, ENTXTC, WPABSC, DWPI: 第一, 多个, 非地面, 覆盖, 卫星, 小区, NTN, 切换, 更换, 更新, 接入, first, multiple, non-terrestrial, coverage, satellite, cell, handover, replacement, update, access

### C. DOCUMENTS CONSIDERED TO BE RELEVANT

| Category* | Citation of document, with indication, where appropriate, of the relevant passages | Relevant to claim No. |
|---|---|---|
| X | CN 114616770 A (QUALCOMM INC.) 10 June 2022 (2022-06-10) description, paragraphs 102-227 | 1-25 |
| A | US 2020029265 A1 (HUGHES NETWORK SYSTEMS, LLC) 23 January 2020 (2020-01-23) entire document | 1-25 |
| A | US 2021235416 A1 (ZTE CORP.) 29 July 2021 (2021-07-29) entire document | 1-25 |
| A | WO 2020192416 A1 (HUAWEI TECHNOLOGIES CO., LTD.) 01 October 2020 (2020-10-01) entire document | 1-25 |
| A | WO 2021196769 A1 (HYTERA COMMUNICATIONS CO., LTD.) 07 October 2021 (2021-10-07) entire document | 1-25 |
| A | ZTE CORPORATION et al. "Control plane aspects of IoT over NTN" *3GPP TSG-RAN WG2 Meeting #113 bis e-meeting R2-2103342*, 20 April 2021 (2021-04-20), entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 September 2023** | **21 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
### Information on patent family members

International application No.

**PCT/CN2023/105245**

| Patent document cited in search report | | | Publication date (day/month/year) | Patent family member(s) | | | Publication date (day/month/year) |
|---|---|---|---|---|---|---|---|
| CN | 114616770 | A | 10 June 2022 | US | 2021144669 | A1 | 13 May 2021 |
| | | | | US | 2021143898 | A1 | 13 May 2021 |
| | | | | US | 2021143900 | A1 | 13 May 2021 |
| | | | | US | 2021242933 | A1 | 05 August 2021 |
| | | | | WO | 2021092505 | A1 | 14 May 2021 |
| | | | | WO | 2021092504 | A1 | 14 May 2021 |
| | | | | EP | 4055726 | A1 | 14 September 2022 |
| | | | | EP | 4055725 | A1 | 14 September 2022 |
| US | 2020029265 | A1 | 23 January 2020 | EP | 3827527 | A1 | 02 June 2021 |
| | | | | BR | 112021001115 | A2 | 20 April 2021 |
| | | | | WO | 2020023381 | A1 | 30 January 2020 |
| | | | | CA | 3106832 | A1 | 30 January 2020 |
| US | 2021235416 | A1 | 29 July 2021 | EP | 3858003 | A1 | 04 August 2021 |
| | | | | WO | 2020034333 | A1 | 20 February 2020 |
| | | | | KR | 20210061407 | A | 27 May 2021 |
| | | | | AU | 2018436759 | A1 | 06 May 2021 |
| | | | | CN | 112789913 | A | 11 May 2021 |
| WO | 2020192416 | A1 | 01 October 2020 | CN | 111756454 | A | 09 October 2020 |
| | | | | AU | 2020248268 | A1 | 18 November 2021 |
| | | | | KR | 20220004044 | A | 11 January 2022 |
| | | | | EP | 3937400 | A1 | 12 January 2022 |
| | | | | VN | 83669 | A1 | 25 January 2022 |
| | | | | IN | 202127048611 | A | 18 February 2022 |
| | | | | CN | 114268387 | A | 01 April 2022 |
| | | | | US | 2022217607 | A1 | 07 July 2022 |
| | | | | RU | 2021131018 | A | 26 April 2023 |
| WO | 2021196769 | A1 | 07 October 2021 | CN | 113498127 | A | 12 October 2021 |

Form PCT/ISA/210 (patent family annex) (July 2022)

**REFERENCES CITED IN THE DESCRIPTION**

**Patent documents cited in the description**

- CN 202210798859

- CN 202210957934